# EUROPEAN PATENT APPLICATION

(11) **EP 2 242 204 A2**
(43) Date of publication of application: **20.10.2010**
(21) Application number: 10250773.8
(22) Date of filing: 14.04.2010
(51) Int. Cl.: H04L 1/18

(54) **Transmission method in transmission system**

(30) Priority: 16.04.2009 JP 2009099525
(71) Applicant: Hitachi Consumer Electronics Co. Ltd., Tokyo 100-0004 (JP)
(72) Inventor: Katsube, Yusaku, Tokyo 100-8220 (JP); Hoda, Isao, Tokyo 100-8220 (JP); Miyata, Katsuya, Tokyo 100-8220 (JP); Akiyama, Hitoshi, Tokyo 100-8220 (JP)
(74) Representative: Hackney, Nigel John

(57) **Abstract**

Within a short-distance wireless transmitting apparatus for use of TV, for transmitting video without interruption and with low power consumption, a transmitter portion having a reception frequency differing from a transmission frequency is provided on a station side having a video source, and a receiver portion for receiving the frequency corresponding to a reception frequency band of the station side and also a transmitter portion for transmitting the frequency corresponding to a reception frequency band of the station side are provided on a panel side for displaying, in the structure thereof, wherein transmission/reception can be operated, simultaneously, by FDD separating in frequency for transmission.

The frequency of the transmitter on the panel side is determined upon basis of a scan result, while scanning a vacant frequency on the station side, and thereby enabling to escape from an interference from other system, when the panel executes the transmission, in the structure thereof.

## Description

The present invention relates to a transmission method in a transmission system, and in particular, it relates to a radio or wireless communication technology for achieving high-speed, high reliability and low consumption of electric power thereof.

As a method for achieving a short-distance wireless transmission of video for TV are already known the followings: a wireless LAN (Local Area Network), a WHDI (Wireless High Definition Interface) and a UWB (Ultra Wide Band), etc., using a frequency band of 2.4 GHz band and/or 5GHz band, an ISM (Industrial Scientific Medical) band internationally license free, i.e., not needing a license fee for using the radio. Any one of those communication methods is able to transmit the radio of TV video through high-speed communication equal to 40 Mbps or higher than. Also, a Wireless HD using a millimeter wave of 60 GHz band is now under the sturdy thereof, as is shown in the following Non-Patent Document 1; this is anticipated to be a method for a high-speed video transmission because of the wide frequency band thereof. In the short-distance wireless transmission for the TV video, it is requested that no intermittent of the video occurs, during a viewing thereof. And, for consumer electric appliances, reduction of consumption of electric power is also strongly required. Further, not limited to the transmission means of video, but by taking costs and high-speed transmission into the consideration thereof, there can be considered a method of combining the millimeter wave of 60 GHz and the transmission of 2.4 GHz band and/or 5GHz band, as is shown in the following Patent Document.

### <Prior Art Documents>

<Patent Documents>
   [Patent Document 1] Japanese Patent Laying-Open No. 2002-124916 (2002).
<Non-Patent Documents>
   [Non-Patent Document 1] Wireless HD Specification Version 1.0 Overview (http://www.wirelesshd.org/WirelessHD Full overview 072009.pdf)

However, with the conventional technology as is shown in the Non-Patent Document 1, since the transmission method thereof is a half-duplex communicationTDD (Time Division Duplexing), there is necessity of interrupting a reception for sending out a resending request when an error of data becomes clear.

Also, within 2.4 GHz band and/or 5GHz band, because of a possibility of common use with other wireless system, there is a concern about interference from other wireless system, and that the video is interrupted when the interference occurs.

Herein, as is shown in the Patent Document 1, if conducting the video transmission on 60 GHz band while conducting the transmission of the resending requirement on 2.4 GHz band and/or 5GHz band, with applying a FDD (Frequency Division Duplexing) enabling a full-duplex communication as the transmission method, since it is possible to send the resending request for error correction while receiving the video when an error is generated within data, then it is possible to transmit the resending request without interruption of the video.

However, since the transmission of the resending request is conducted on 2.4 GHz band and/or 5GHz band, in the transmission of the resending request, there is a possibility of an obstruction caused due to interference from other wireless system(s).

Also, with this method, since this turns always the apparatus into the conducting condition every time when sending the resending request; therefore it has a drawback that the consumption of electric power is large.

The present invention, within a short-distance wireless transmission apparatus, accomplished by taking the drawbacks mentioned above into the consideration thereof, has an object to provide a transmission apparatus for enabling an error correction of video data without such an obstruction, without an interruption of video, and also for enabling to suppress the consumption of electric power.

Preferably, for accomplishing the object mentioned above, according to the present invention, there is provided a transmission method in a transmission system, including: a station side transmitting apparatus, having a transmitter portion, which is configured to transmit with a first frequency, and a receiver portion, which is configured to receive with a second frequency different from said first frequency, wherein said transmitter portion transmits video data; and a panel side transmitting apparatus, having a transmitter portion, which is configured to transmit with said second frequency, and a receiver portion, which is configured to receive said first frequency, wherein said transmitter portion makes a resending request for resending data for correcting an error of the video data on said transmitter portion, comprising the following steps of: detecting on whether to receive a signal from other system or not, for each of plural numbers of reception frequencies, which are determined in advance, within the receiver portion of said station side transmitting apparatus; noticing a reception frequency when not receiving the signal from said other system, as the second frequency, from the transmitter portion of said station side transmitting apparatus to the receiver portion of said panel side transmitting apparatus; and executing said resending request, with the second frequency noticed, within the transmitter portion of said panel side transmitting apparatus.

Preferably, according to the present invention, the transmission method in a transmission system, described in the above, further comprises the following steps of: detecting on whether to detect the signal from the other system, with other frequency of the plural numbers of frequencies, which are determined in advance, when receiving the signal from said other system; and switching to other frequency, as the second frequency, when not receiving the signal from said other system.

Preferably, with the present method, since the video data can be transmitted with the first frequency, as well as, transmitting the resending request with the second frequency, even if an error is in the video data, then the video data never be interrupted.

Preferably, since a frequency is used, on which no signal is received from other system, when executing the transmission of the resending request, it is possible to avoid an interference from the other system.

Preferably, the transmission method in a transmission system, described in the above, further comprises the following steps of:
detecting an error of said video data received in the receiver portion, within said panel side transmitting apparatus; starting the transmitter portion of said panel side transmitting apparatus, when detecting the error of said vide data; and executing said resending request with a receiving frequency, which is noticed, within said transmitter portion started.

Preferably, the transmission method in a transmission system, described in the above, further comprises the following steps of:
receiving the resending request within the receiver portion of said station side transmitting apparatus; producing resending data for correcting the error of the video data, upon basis of said resending data, within said station side transmitting apparatus;
transmitting the resending data produced, by the transmitter portion of said station side transmitting apparatus; receiving the resending data transmitted, by a receiver portion of said panel side transmitting apparatus; executing an error correction upon basis of the resending data received, within said panel side transmitting apparatus; noticing a completion of the error correction from the transmitter portion of said panel side transmitting apparatus to the receiver portion of said station side transmitting apparatus, when said error correction is completed; stopping transmission of the resending data, within the transmitter portion of said station side transmitting apparatus, when the completion of the error correction is noticed; and starting of the transmitter portion of said panel side transmitting apparatus is stopped, when no resending data is received by the receiver portion of said panel side transmitting apparatus.

Preferably, within the transmissionmethod in a transmission system, described in the above, control information for controlling an electric power for transmission, before transmitting the video data and the resending data, between said station side transmitting apparatus and said panel side transmitting apparatus.

Preferably, according to the present method, it is possible to stop the transmission, during the time when no detection is made on said video data. Also, with the control information for controlling the electric power for transmission, it is possible to achieve the transmission with a suitable or optimal transmission power. For this reason, it is possible to suppress the consumption of electric power within the apparatus.

Preferably, according to the present invention, it is possible to provide a short-distance wireless transmitting apparatus, being low in the power consumption, high in the reliability, and superior in the usability, and a low cost thereof.

### BRIEF DESCRIPTION OF THE SEVERAL VIEWS OF THE DRAWING

Those and other objects, features and advantages of the present invention will become more readily apparent from the following detailed description when taken in conjunction with the accompanying drawings wherein:
Fig. 1 is a view for showing the entire structures of a short-distance wireless transmission apparatus, according to a first embodiment of the present invention;
Fig. 2 is a view for showing the detailed structures of a short-distance wireless transmission apparatus, according to the first embodiment mentioned above;
Fig. 3 is a view for showing the structures of STA BBLSI1 and a panel BBLSI1, according to the first embodiment mentioned above;
Figs. 4A-4C are flowcharts for showing a transmission operation on STA side and an operation of carrier sense, and a view for showing an order of the carrier sense, according to the first embodiment mentioned above;
Fig. 5 is a flowchart for showing the transmission operation of panel side, according to the first embodiment mentioned above;
Fig. 6 is a flowchart for showing operations of the short-distance wireless transmission apparatus, according to the first embodiment mentioned above;
Fig. 7 is a view for showing the structure of a transmission frame on STA side, including information, such as, a preamble, GI, control signals, video data, panel sending frequency information, according to the first embodiment mentioned above;
Fig. 8 is a view for showing the structure of a transmission frame on panel side, including information, such as, a preamble, GI, control signals, a resending request, according to the first embodiment mentioned above;
Fig. 9 is a view for showing the structure of a transmission sub-frame on STA side, including GI, video signals, information of resending data, according to the first embodiment mentioned above;
Fig. 10 is a view for showing the structure of a transmission sub-frame on panel side, including information, such as, GI, information of error correction completion ACK, according to the first embodiment mentioned above;
Fig. 11 is a view for showing the structures of signal frequencies on station side, according to the first embodiment mentioned above;
Fig. 12 is a view for showing the structures of signal frequencies on panel side, according to the first embodiment mentioned above;
Fig. 13 is a view for showing the detailed structures of a short-distance wireless transmission apparatus, according to a second embodiment of the present invention;
Fig. 14 is a view for showing the structures of signal frequencies on station side, according to the second embodiment mentioned above;
Fig. 15 is a view for showing the structures of signal frequencies on panel side, according to the second embodiment mentioned above;
Fig. 16 is a view for showing a result of memorizing a search order and a gain of carrier sense on panel side, symbol timing, according to a third embodiment of the present invention;
Fig. 17 is a flowchart for showing transmitting operation on STA side, according to the third embodiment mentioned above;
Fig. 18 is a flowchart for showing transmitting operation on panel side, according to the third embodiment mentioned above;
Fig. 19 is a flowchart for showing the operations of the short-distance wireless transmission apparatus, according to the third embodiment mentioned above;
Fig. 20 is a view for showing the time chart of a transmission frame on STA side, including information, such as, a preamble, GI, control signals, video data, panel sending frequency information, according to the third embodiment mentioned above;
Figs. 21A and 21B are views for showing the detailed structures of a short-distance wireless transmission apparatus, according to a fourth embodiment of the present invention;
Fig. 22 is a flowchart for showing the operation of carrier sense, according to the fourth embodiment mentioned above;
Fig. 23 is a view for showing the structure of the short-distance wireless transmission apparatus of MIMO structure, according to the fourth embodiment mentioned above;
Fig. 24 is a view for showing the structures of a transmission frame on STA side including information, such as, a preamble, GI, control signals, video data, panel sending frequency information, panel TPC information, according to a fifth embodiment of the present invention;
Fig. 25 is a view for showing the structure of a transmission frame on panel side including a preamble, GI, control signals, video data, panel sending frequency information, panel TPC information, according to the fifth embodiment mentioned above;
Fig. 26 is a flowchart for showing the operations of a transmission power control on STA side, according to the fifth embodiment mentioned above;
Fig. 27 is a flowchart for showing the operations of a transmission power control on panel side, according to the fifth embodiment mentioned above;
Fig. 28 is a flowchart for showing calculation operations of TPC information, according to the fifth embodiment mentioned above;
Fig. 29 is a view for showing an outlook of the structures of a display panel, according to a sixth embodiment of the present invention; and
Fig. 30 is a view for showing an outlook of the structures of a RF remote controller, according to a seventh embodiment of the present invention.

### DETAILED DESCRIPTION OF THE PREFERRED EMBODIMENTS

### <Embodiment 1>

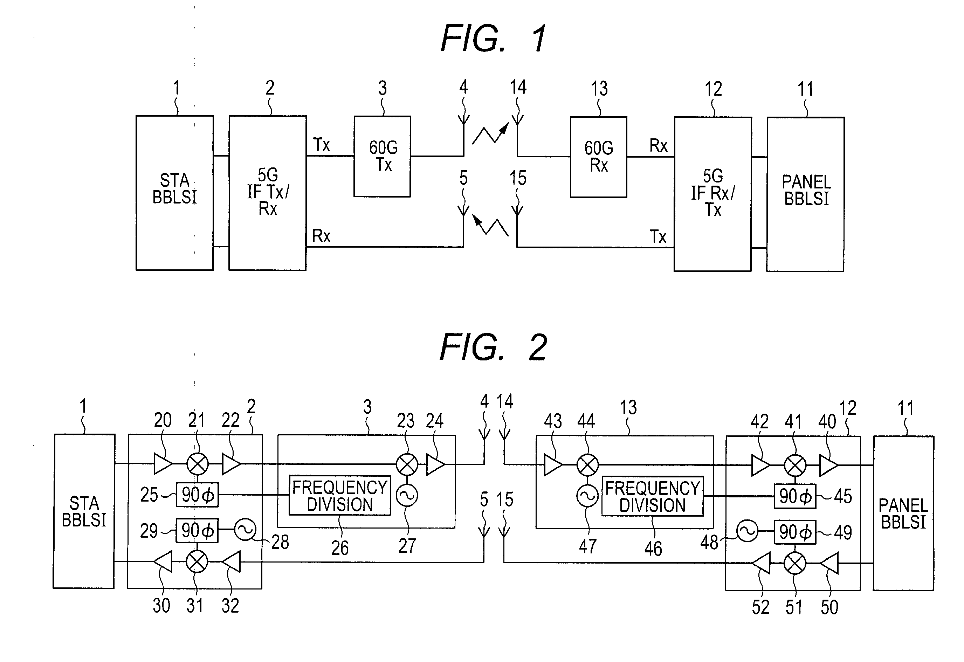

Hereinafter, explanation will be given on a first embodiment of the present invention, by referring to Figs. 1 to 12 attached herewith.

In Fig. 1, a station (STA) side wireless system is constructed with a STA BBLSI 1, a 5G intermediate frequency (IF) Tx/Rx portion 2, a 60G Tx portion 3, a 60G antenna 4 and a 5G antenna 5, and a panel side wireless system is constructed with a BBLSI 11, a 5G IF Rx/Tx portion 12, a 60G Rx portion 13, a 60G antenna 14 and a 5G antenna 15.

With the present structures, transmission or sending of frames, each being structured by a sub-frame for showing a unit of decoding of data, such as, video, etc. , is achieved by the station side wireless system mentioned above, while down communication for receiving is achieved by the panel side wireless system mentioned above.

In this down communication, the data, such as, the video, etc., is conducted with modulation by the STA BBLSI 1 building up the station side wireless system, and is conducted with amplification and frequency conversion into an IF signal of 5 GHz band, by the 5G IF Tx/Rx portion 2, and is further conducted with frequency conversion into a RF signal of 60 GHz band, by the 60G Tx portion 3; then the RF signal, after amplification thereof, is transmitted or sent from the 60G antenna 4. In the panel side wireless system, the RF signal received by the 60G antenna 14, which is transmitted from the station side wireless system, is amplified by the 60G Rx portion 13, and is converted on frequency thereof into an IF signal, and the above-mentioned IF signal is converted on frequency thereof into a base-band signal by the 5G IF Rx/Tx portion 12, and is demodulated by the panel BBLSI 11; thereby the data, such as, the video, etc., is transmitted wirelessly between the station and the panel.

Also, with the structures mentioned above, a frame that is constructed with sub-frames indicative of a unit of decoding of the data, such as, a resending request, etc., is transmitted by the panel side wireless system mentioned above, and it is received by the station side wireless system; i.e., executing an up communication.

In this up communication, the data, such as, the resending request, etc., is modulated by the panel BBLSI 11 building up the panel side wireless system mentioned above, and is amplified and converted on frequency thereof into a RF signal of 5 GHz band within the 5G IF Rx/Tx portion 12, and the RF signal is transmitted from the 5G antenna 15 after being amplified. In the station side wireless system, the RF signal received by the 5G antenna 5, which is transmitted from the panel side wireless system, is amplified and converted on frequency thereof into a base-band signal by the 5G IF Tx/Rx portion 2, and is demodulated by the STA BBLSI 1; thereby the data, such as, the resending request, etc., is transmitted wirelessly between the station and the panel.

Next, explanation will be given on the structures of the 5G IF Tx/Rx portion 2 and the 60G Tx portion 3, and those of the 5G IF Rx/Tx portion 12 and the 60G Rx portion 13, by referring to Fig. 2.

The 5G IF Tx/Rx portion 2 is constructed with a STA transmission base-band signal processor portion 20, a STA transmission orthogonal mixer 21, a STA transmission IF amplifier 22, a STA transmission 90-degrees phase shifter 25, a STA reception VCO 28, a STA reception 90-degrees phase shifter 29, a STA reception base-band signal processor portion 30, a STA reception orthogonal mixer 31, and a STA reception LNA 32.

When being in a transmitting operation, an input of transmission base-band signal from the STA BBLSI 1 is filtered within the STA transmission orthogonal mixer 21 to filter out an unnecessary wave (s) therefrom, and is amplified. Thereafter, the signal inputted into the STA transmission orthogonal mixer 21 is up-converted from a transmission base band up to the transmission IF signal of 5 GHz band, through mixing with a transmission IF orthogonal LO signal, which is outputted by the STA transmission 90-degrees phase shifter 25. The transmission IF orthogonal LO signal is made of two (2) signals having the same phase and the orthogonal phase thereto, and is produced by dividing an IFLO signal outputted from a STA transmission frequency divider 26 of the 60G Tx portion 3, into 1/2 in frequency thereof, within the STA transmission 90-degrees phase shifter 25. The transmission IF signal is amplified by the STA transmission IF amplifier 22, and is outputted into the 60G Tx portion 3. When being in a receiving operation, the received RF signal inputted from the 5G antenna 5 is amplified by the STA receiving LNA 32, and the received and amplified RF signal is mixed with a reception orthogonal LO signal outputted by the STA reception 90-degrees phase shifter 29, within the STA reception orthogonal mixer 31, and a reception base-band signal is outputted to the STA reception base-band signal processor portion 30. Within the STA reception base-band signal processor portion 30, a desired wave is amplified, while filtering out an obstruction wave(s), and it is outputted to the STA BBLSI 1. The reception orthogonal LO signal is made of two (2) signals, having the same phase and the orthogonal phase thereto, and it is produced by dividing the frequency of the received LO signal into 1/2, which is outputted from the STA reception VCO 28, within the STA reception 90-degrees phase shifter 29.

The 60G Tx portion 3 is constructed with a STA transmission RFmixer23, aSTAtransmissionRFamplifier24, theSTAtransmission frequency divider 26, and a STA transmission RFVCO 27.

When being in a transmitting operation, through mixing of the transmission IF signal, i.e., an output of the 5G IF Tx/Rx portion 2, and a transmission RFLO signal outputted from the STA transmission RFVCO 27, an up-conversion is made from the transmission IF signal of 5 GHz band into the transmission RF signal of 60 GHz band. The transmission RF signal is amplified by the STA transmission RF amplifier 24, and is outputted to the 60G antenna 4. On the other hand, the transmission RFLO signal outputted from the STA transmission RFVCO 27 is also inputted into the STA transmission frequency divider 26, wherein the transmission RFLO signal is divided in frequency thereof; thereby outputting the transmission IFLO signal of 10 GHz band, having the frequency band 2-times larger than that of the transmission IF signal, to the STA transmission 90-degrees phase shifter 25.

The 60G Rx portion 13 is constructed with a panel reception RFLNA 43, a panel reception RF mixer 44, a panel reception frequency divider 46 and a panel reception RFVCO 47.

When being in a receiving operation, the received RF signal inputted from the 60G antenna 14 is amplified by the panel reception RFLNA 43, and the amplified reception RF signal is mixed with the reception RFLO signal outputted by the panel reception RFVCO 47, within the panel reception RF mixer 44, and it is outputted to the 5G IF Rx/Tx portion 12 as the reception IF signal. On the other hand, the reception RFLO signal outputted from the panel reception RFVCO 47 is also inputted into the panel reception frequency divider 46, wherein the reception RFLO signal is divided in frequency; thereby the reception IFLO signal having 10 GHz band having the frequency band 2-times larger than that of the transmission IF signal, is outputted into a panel reception 90-degrees phase shifter 45.

The 5G IF Rx/Tx portion 12 is constructed with a panel reception base-band signal processor portion 40, a panel reception orthogonal mixer 41, a panel reception IFLNA 42, a panel reception 90-degrees phase shifter 45, a panel transmission VCO 48, a panel transmission 90-degrees phase shifter 49, a panel transmission base-band signal processor portion 50, a panel transmission orthogonal mixer 51 and a panel transmission amplifier 52.

When being in a receiving operation, the reception IF signal inputted from the 60G Rx portion 13 is amplified within the panel reception IFLNA 42, and the amplified reception IF signal is mixed a reception IF orthogonal LO signal outputted by the panel reception 90-degrees phase shifter 45, within the panel reception orthogonal mixer 41, and it is outputted into the panel reception base-band signal processor portion 40 as a reception base-band signal. Within the panel reception base-band signal processor portion 40, the desired wave is amplified, while filtering out the obstruction wave and is outputted into the panel BBLSI 11. The reception IF orthogonal LO signal is made of two (2) signals having the same phase and the orthogonal phase thereto, and is produced by dividing the frequency of the reception IFLO signal into 1/2, which is outputted from the panel reception frequency divider 46 of the 60G Rx portion 13, within a panel reception 90-degrees phase shifter 45.

When being in a transmitting operation, an input of the transmission base-band signal from the panel BBLSI 11 is filtered within the panel transmission base-band signal processor portion 50 to filter out an unnecessary wave (s) therefrom, and is amplified. Thereafter, the signal inputted into the panel transmission orthogonal mixer 51 is up-converted from a transmission base band up to the transmission RF signal of 5 GHz band, through mixing with a transmission orthogonal LO signal, which is outputted by the panel transmission 90-degrees phase shifter 49. The transmission orthogonal LO signal is made of two (2) signals having the same phase and the orthogonal phase thereto, and is produced by dividing a LO signal outputted from a panel transmission VCO 48 into 1/2 in frequency, within the panel transmission 90-degrees phase shifter 49. The transmission RF signal is amplified by the panel transmission amplifier 52, and is outputted to the 5G antenna 15.

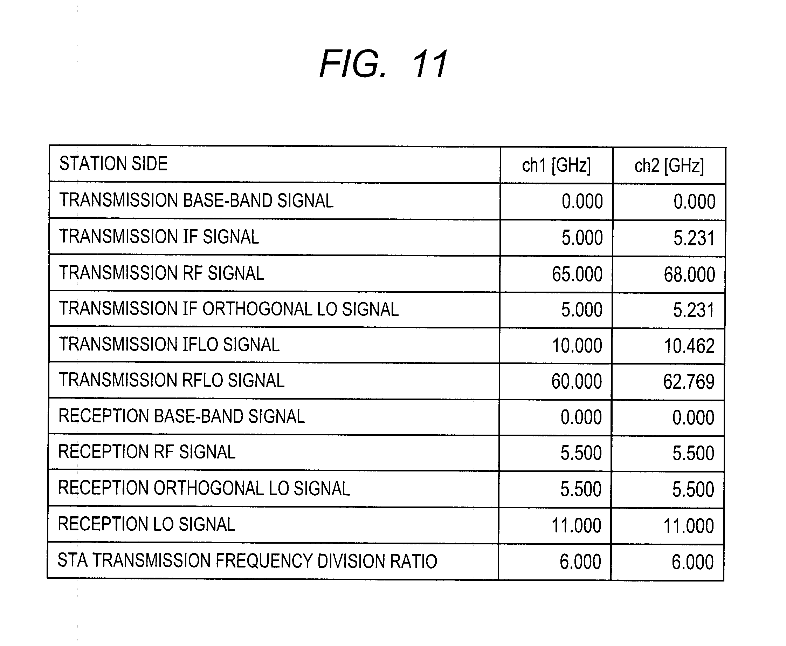

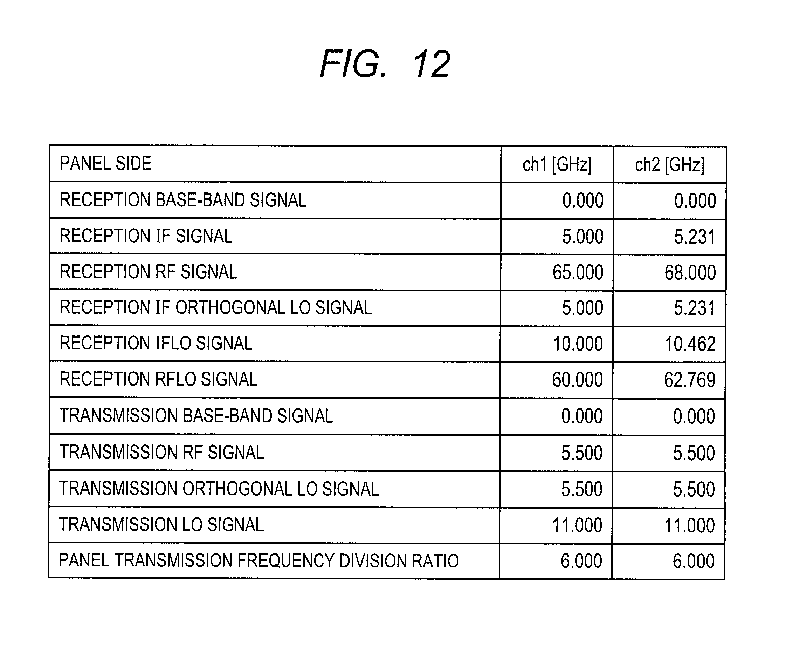

Examples of the transmission base-band signal, the transmission IF signal, the transmission RF signal, the transmission IF orthogonal LO signal, the transmission IFLO signal, the transmission RFLO signal, the reception base-band signal, the reception RF signal, the reception orthogonal LO signal, the reception LO signal, and a ratio of frequency division of the STA transmission frequency divider, on the station side of the structures mentioned above, are shown in Fig. 11. Also, examples of the reception base-band signal, the reception IF signal, the reception RF signal, the reception IF orthogonal LO signal, the reception IFLO signal, the reception RFLO signal, the transmission base-band signal, the transmission RF signal, the transmission orthogonal LO signal, the transmission LO signal, and a ratio of frequency division of the panel reception frequency divider 46, on the panel side, are shown in Fig. 12. With a frequency channel of the down communication, if it is defined that "ch1" is 65 GHz and "ch2" is 68 GHz, it is possible to switch the frequency channel by changing to 60 GHz when the station side transmission RFLO signal and the panel side reception RFLO signal are "ch1" or to 62.769 GHz when they are "ch2", while fixing the ratio of frequency division of the STA transmission frequency divider and the ratio of frequency division of the panel reception frequency divider 46 to "6", as shown in Figs. 11 and 12. The frequency channel of the up communication is determined by a carrier sense, and during the time when there is no carrier, the reception RF signal on the station side and the transmission RF signal on the panel side are determined at 5.5 GHz.

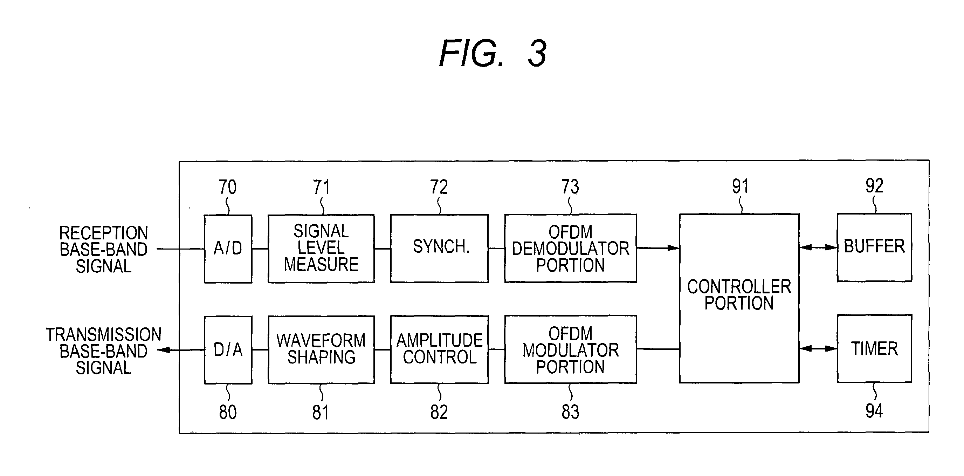

Next, explanation will be given on the structures of the STA BBLSI 1 and the panel BBLSI 11, by referring to Fig. 3.

The STA BBLSI 1 is constructed with an A/D converter 70, a signal-level measuring portion 71, a synchronizing portion 72, an OFDM demodulator portion 73, a D/A converter 80, a wave-shaping portion 81, an amplitude controller portion 82, an OFDM modulator portion 83, a controller portion 91 and a buffer portion 92.

When being in the transmitting operation, transmission data inputted into the buffer portion 92 is taken out by the controller portion 91, and the transmission data is outputted into the an OFDM modulator portion 83. In the OFDM modulator portion 83, OFDM modulation is conducted on the transmission data, and the modulated signal is outputted therefrom. Within the amplitude controller portion 82, the modulated signal is finely adjusted on the amplitude thereof, and is filtered within the wave-shaping portion 81, and then it is inputted into the D/A converter 80. Within the D/A converter 80, a digital signal, i.e., the modulated signal, is converted into an analog signal, and thereby outputting the transmission base-band signal therefrom. When being in the receiving operation, within the A/D convert 70, A/D conversion is conducted on the inputted reception base-band signal, and it is outputted into the signal-level measuring portion 71. Within the signal-level measuring portion 71, a level of the inputted signal is measured, and if it is equal to or greater than a predetermined threshold value, it is determined that there is an input of the signal, and an amplitude factor of the 5G IF Tx/Rx portion 2 is so adjusted that the level outputted by the A/D converter 70 comes to a predetermined value. This process of controlling the amplification factor to the optimal value is called, "AGC (Automatic Gain Control)". The signal out putted by the signal-level measuring portion 71 is adjusted of a carrier frequency error and synchronized with symbol timing by the synchronizing portion 72, and it is inputted into the OFDM demodulator portion 73. The OFDM demodulator portion 73 conducts the OFDM demodulation on an input signal, and outputs a demodulation signal to the controller portion 91. In the controller portion 91, after determination of a frame error, detection is made on presence/absence of the resending request among the demodulated signals. When detecting the resending request, it produces the transmission data to be resent from the data stored within the buffer 92, and sets up a data holding time, and thereby storing it into the buffer 92. The resending data stored within the buffer portion 92 is transmitted as the transmission data when being in the transmission operation. The transmission data, on which no resending request is made, is determined that the reception thereof is completed correctly, and then it is deleted from the buffer, or is overwritten if new transmission data is written into. On the other hand, the resending data stored within the buffer portion 92 mentioned above is protected, not being overwritten or deleted, until when the data holding time passes away.

Herein, explanation will be made on the data holding time. The data holding time is determined by a capacity of the buffer portion 92 on the STA and panel sides, or a time from detection of an error on the panel side until correction of data and after how much seconds of time the video data is buffered to be displayed on the panel. For example, there is no capacity within the panel side buffer portion 92, since the video cannot be held therein, then the data received on the panel side is displayed on the panel, immediately. This means that the video cannot be held therein, then the data holding time comes to "0" second. Or, if it takes "1" second from detection of an error until correction of the data on the panel side, and when the video data is displayed on the panel after being buffered for "2" seconds, then the data holding time is "1" second.

The panel BBLSI 11 is almost similar to that of the STA BBLSI 1, in the structures thereof; i.e., is constructed with the A/D converter 70, the signal-level measuring portion 71, the synchronizing portion 72, the OFDM demodulator portion 73, the D/A converter 80, the wave-shaping portion 81, the amplitude controller portion 82, the OFDM modulator portion 83, the controller portion 91 and the buffer portion 92, but differs from in performances of the A/D converter 70 and the D/A converter 80, such as, sampling rates and/or resolution, dynamic ranges, etc. When being in the transmitting operation, the transmission data inputted into the buffer portion 92 is taken out by means of the controller portion 91, and the transmission data is outputted into the OFDM modulator portion 83. Within the OFDM modulator portion 83, the OFDM modulation is conducted on the transmission data, and the modulated data is outputted therefrom. The modulated signal is finely adjusted on the amplitude thereof, within the amplitude controller portion 82, and is filtered within the wave-shaping portion 81, and it is inputted into the D/A converter 80. Within the D/A converter 80, a digital signal, i.e., the modulation signal is converted into an analog signal, thereby outputting a transmission base-band signal therefrom. When being in the receiving operation, within the A/D converter 70, an A/D conversion is conducted on the reception base-band signal inputted, so as to output it into the signal-level measuring portion 71. Within the signal-level measuring portion 71, a level is measured of the inputted signal, and if it is equal to or greater than a predetermined threshold value, then it is determined that there is an input of the signal, then the amplitude factor of the 5G IF Rx/Tx portion 12 is so adjusted that the level outputted by the A/D converter 70 comes to a predetermined value. The signal outputted by the signal-level measuring portion 71 is adjusted of a carrier frequency error and synchronized with symbol timing by the synchronizing portion 72, and it is inputted into the OFDM demodulator portion 73. The OFDM demodulator portion 73 conducts the OFDM demodulation on an input signal, and outputs a demodulation signal to the controller portion 91. In the controller portion 91, after determination of a frame error, detection is made on presence/absence of the resending request among the demodulated signals. The demodulation data without an error therein is stored in the buffer portion 92, and after being buffered therein for a predetermined time, the video is displayed on a panel. If detecting the resending data without an error therein among the modulation signals, correction is made on the video data having the error with using the resending data. If there is error data, then a resending request including information of the error data is produced, and after setting up the data holding time, it is stored in the buffer portion 92. The resending request is transmitted as the transmission data when being in the transmitting operation. The video data stored within the buffer portion 92 is deleted or overwritten by the next coming video data after being displayed in the panel. On the other hand, the resending request stored within the buffer portion 92 mentioned above is protected not being overwritten or deleted, until the data holding time passes away.

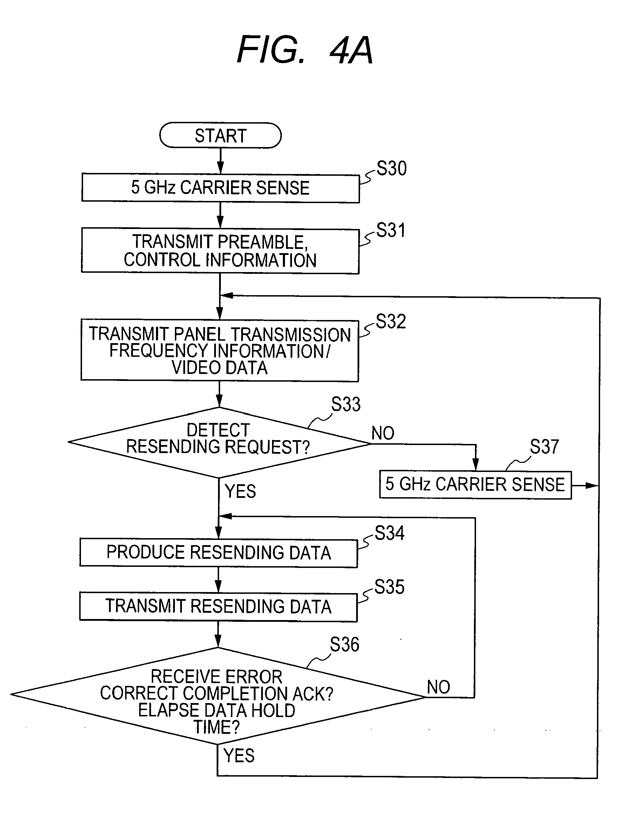

Next, explanation will be given on the transmitting operation of the STA side, by referring to a flowchart shown in Fig. 4A. First of all, a carrier sense is made for the purpose of confirming an available or usable frequency among the 5 GHz frequency band. The frequency having no carrier thereon is set as a vacant frequency into paneltransmission frequencyinformation.In the carriersense, if there is a carrier, it is determined that the frequency channel is used, and other frequency channel is set up (S30). After the carrier sense, the control signal necessary for demodulation is transmitted on 60 GHz band (S31). Next, the panel transmission frequency information and the video data are modulated with a modulation method, upon basis of the control information, and are transmitted to the panel side (S32). If receiving the carrier on the 5 GHz band, it is confirmed on presence/absence of the resending request, which the panel transmits within the reception data (S33) . If there is no resending request, and it is other than the data of the panel, since it is transmission data from other equipment, then operation of the carrier sense is conducted, again, and the vacant frequency is set up, again, to be the panel transmission frequency information (S37) . If detecting the resending request, resending data is produced (S34), upon basis of the information within the resending request, and the resending data is transmitted (S35). Thereafter, until when receiving an error correction completion ACK, or passing the data holding time away, transmission of the resending data is continued. When receiving the error correction completion ACK, or passing the data holding time away, then transmission of the video data is continued, again (S36).

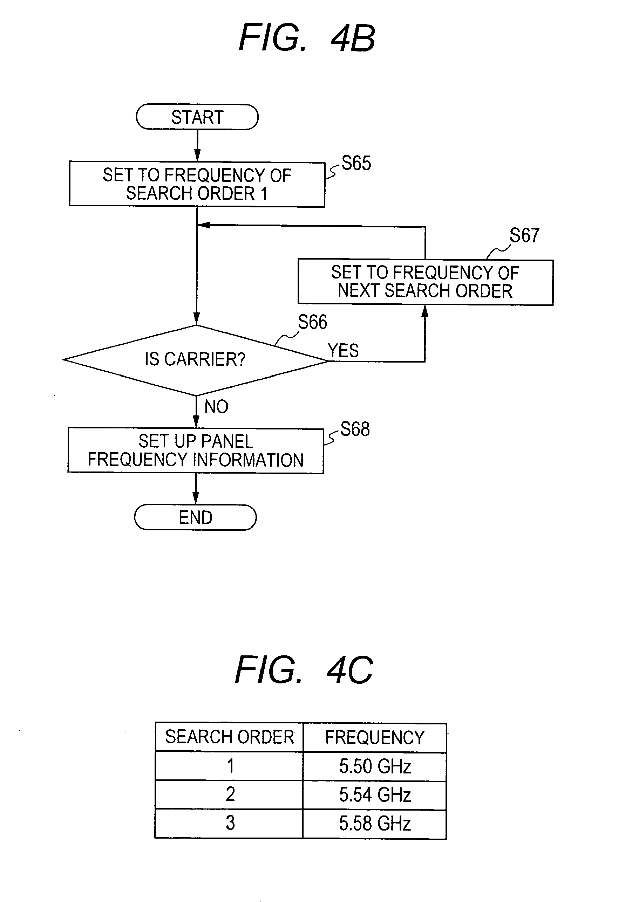

Herein, explanation will be made on the detailed operation of the carrier sense of STA, by referring to a flowchart shown in Fig. 4B and a panel transmission frequency table shown in Fig. 4C. The panel transmission frequency table is memorized within the controller portion 91, in advance.

Firstly, by setting the reception orthogonal LO signal on the station side to the frequency, which is indicated on a line of search order 1, it is possible to receive the carrier of the frequency mentioned above (S65). It is determined that there is no carrier if there is no input of the signal for a predetermined time (S66), and the reception frequency set at present is set up as the panel transmission frequency (S68). When there is an input of the signal, it is determined that there is a carrier, then setup is made onto the next coming frequency in search order (S67). If there is no remaining search order, then determination will be continued on presence/absence of the carrier, while turning back to a beginning search order.

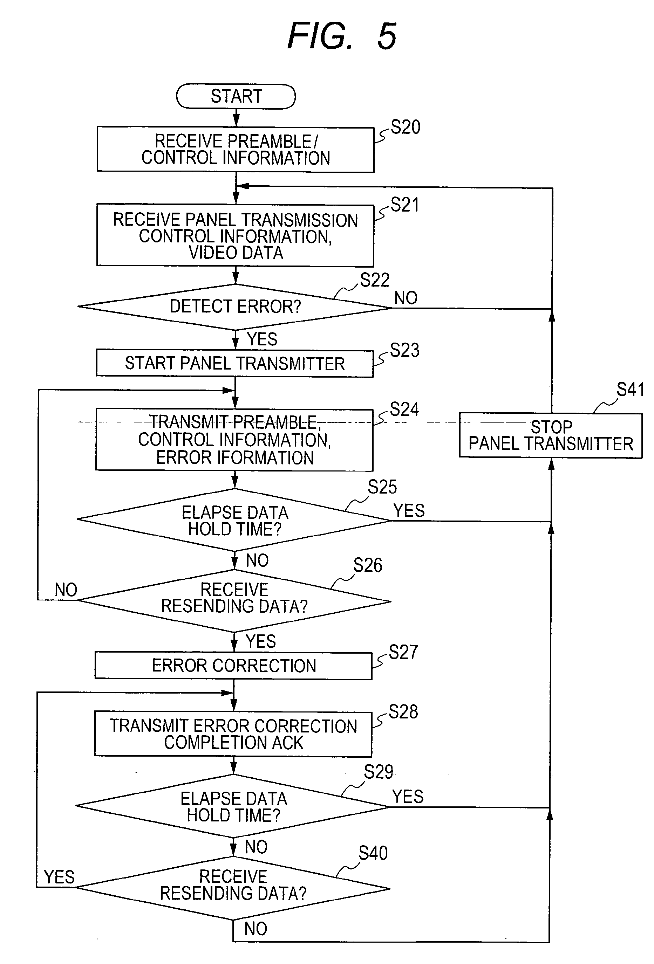

Next, explanation will be made on the operation of transmission on the panel side, by referring to a flowchart shown in Fig. 5. First of all, the control information transmitted from STA is received (S20) . The transmission signal is demodulated upon this control information; i.e., the panel transmission frequency information and the video data are demodulated (S21). During reception of the video data, detection is made on an error of the video data (S22). When an error is detected on the video data, a panel transmitter is started up. In this instance, the transmission frequency of the panel transmitter is set up upon basis of the panel transmission frequency information mentioned above (S23) . After finishing startup of the panel transmitter are transmitted the control information and the resending request, which are necessary for demodulation of the transmission signal on the panel side (S24) . Determination is made on if the data holding time passes away or not after detecting the error (S25), and the panel transmitter is stopped (S41). When determining that it has passed away, determination is made on presence/absence of the resending data within the data, including the video data that is transmitted by the STA side therein (S26), and if it is determined that there is no resending data, then the resending request is transmitted, again. When receiving the resending data, correction is made on the error data upon basis of the resending data mentioned above (S27). After completion of correction of the data mentioned above, a notice that the error correction is completed is transmitted to the STA side as the error correction completion ACK (S28). Thereafter, determination is made on if the data holding time passes away or not (S29), and if determined it has passed, the panel transmitter is stopped. If the data holding time does not pass away, determination is made on presence/absence of the resending data within the data, including the video data transmitted by the STA side therein (S40), and if determined that there is no resending data therein, then the panel transmitter is stopped. If there is the resending data, since there is a possibility that the STA side cannot receive the error correction completion ACK, correctly, then the error correction completion ACK is transmitted, again.

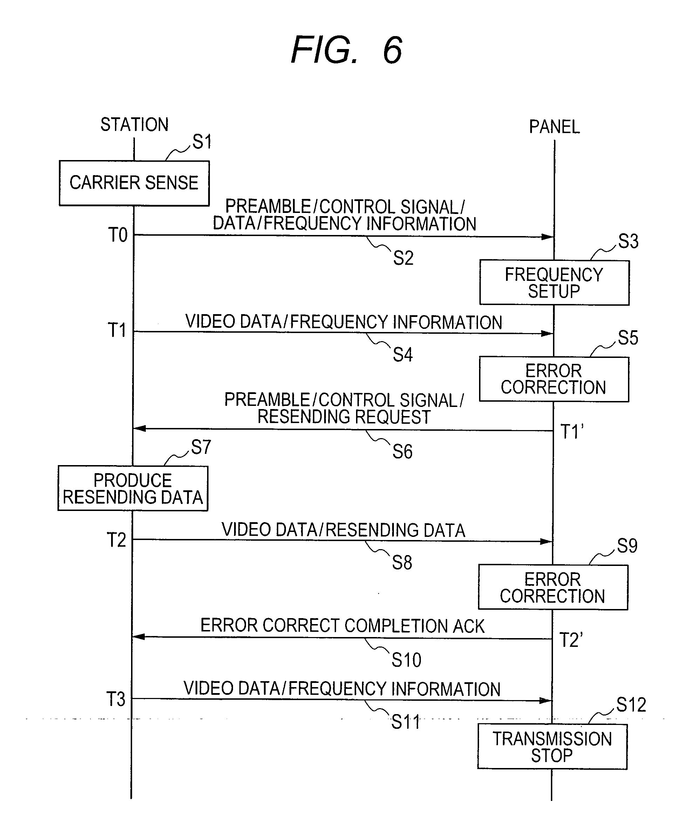

Next, explanation will be given on a flow of transmission of the video, including the resending process and correction process therein, by referring to Fig. 6.

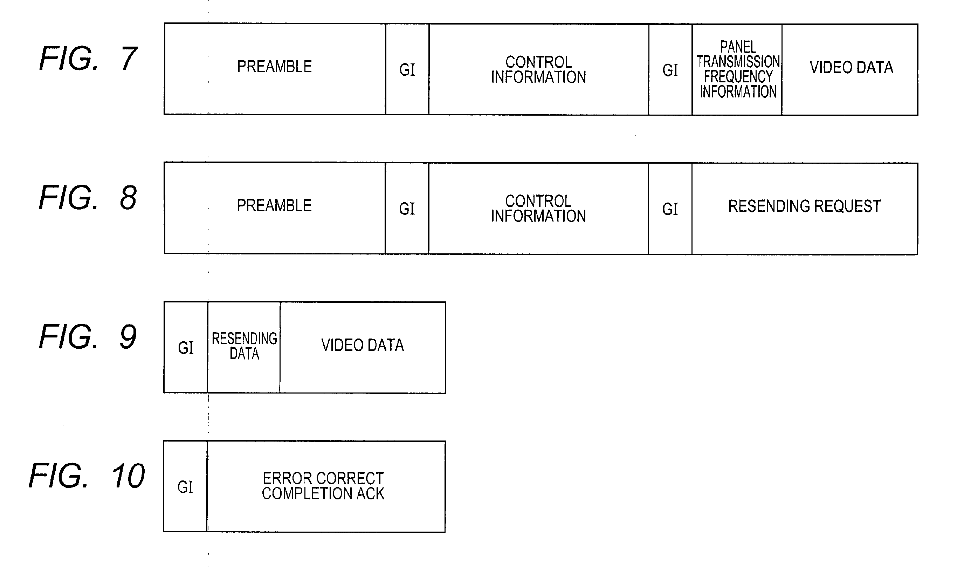

On the station side is conducted the carrier sense of 5 GHz band, and the panel transmission frequency information is determined or set up (S1). Next, at timing of "T0", a sub-frame,° including the video data and the panel transmission frequency information mentioned above, is transmitted, following to the preamble necessary for the OFDMmodulation, the GI (Guard Interval) and the control signal (S2), as is shown in Fig. 7. The GI is necessary for dividing a symbol of the OFDM. On the panel side, upon demodulation of OFDM by the preamble and the control signal received, and obtaining of the information of the video data and the panel transmission frequency information, setup of the panel side transmission frequency is started (S3), from the information of the panel transmission frequency information. On the station side, at the timing "T1" is transmitted the information of the next video and the panel transmission frequency information (S4). On the panel side, when detecting loss of the sub-frame (S5), the panel side transmitter portion is started at timing "T1'", thereby to transmit the resending request, obtained by adding an error signal, indicating which one is the data lost, following to the preamble, the GI and the control signal, as is shown in Fig. 8, to the station side (S6). On the station side, demodulating the OFDM signal by the preamble and the control signal, the resending data is produced (S7) upon basis of the information added with said error information, and as the sub-frame shown in Fig. 9, the resending data is added to the video data, and they are transmitted to the panel side (S8). On the panel side, the video data is corrected by the resending data (S9), and if the error correction is completed at timing "T2'", then the sub-frame, including the error correction completion ACK as shown in Fig. 10, is transmitted (S10). When receiving the error correction completion ACK on the station side, at a next frame timing, i.e., at timing "T3", the video data and the vacant frequency information are transmitted to the panel side (S11). On the panel side, when confirming that there is no resending data nor data lost within the reception data, the transmitter portion of the panel side is stopped (S12).

As was shown in the above, with FDD, it is possible to enable the error correction while receiving the video. Also, the wireless systems on the station side and the panel side have no transmitter of the same frequency band; however, since the carrier sense is conducted on the station side, the vacant frequency information is transmitted to the panel side, and the panel side executes transmission with using the transmission frequency upon basis of the vacant frequency information mentioned above, therefore the panel side transmission frequency can avoid the collision upon that of other wireless system(s) . Thus, it is possible to achieve the control similar to CSMA/CA (Carrier Sense Multiple Access with Collision Avoidance), which is widely employed in a field of wireless LAN. Since the panel side executes the transmitting operation only when detecting an error, there is no necessity of always starting the transmission during the communication, as with FDD method of W-CDMA (Wideband Code Division Multiple Access), i.e., the communication regulation of a mobile phone), and therefore it is possible to greatly reduce the consumption of electric power. Also, the station side receiver portion must be in the waiting condition for conducting the carrier sense, even when the panel side stops the transmission; however, comparing to the normal receiving condition, since it is not necessary to demodulate the data, then the power consumption is small.

Also, though the wireless system mentioned above uses the 60 GHz band and 5 GHz band, as an example, however it should not be restricted to this. Thus, the wireless system uses the frequency bands differing from each other, and for example, also in case of the structure using 60 GHz band and 2.4 GHz band, the similar effect to that of the embodiment 1 mentioned above can be obtained, if the reception frequency of the station side and the transmission frequency on the panel side are enabled with 2.4 GHz band.

Also, as the method for determining the up frequency, although the explanation was given on example of detecting and transmitting the panel side transmission frequency information on the station side; however it should not be limited to this. Thus, as a method for determining the down frequency, it is also possible to adopt such the structure that, while conducting the carrier sense on the panel side, upon basis of this result, the transmission frequency information of the station side is transmitted from the panel side, and the received transmission frequency of the station side is set into the transmission frequency information of the station side.

Also, within the wireless system mentioned above, the transmitter of the panel side turns ON/OFF when detecting an error, but not in synchronism with. In this instance, oscillation frequency of the panel reception RFVCO 47 is changed due to swing of a power-supply line; i.e., there is a possibility that it gives an influence upon reception of the video data. Herein, as timing of turning ON/OFF of the transmitter on the panel, it is assumed to be conducted at a portion of the GI of the sub-frame shown in Figs. 7 through 10. Since the GI has no chance to be used as the video data, there is no influence upon reception of the video data, if the influence of turning ON/OFF of the transmitter on the panel is within the GI. Other than that, without exchanging at the portion of GI, the influence disappears if conducting turning ON/OFF of the transmitter on the panel side other than the portion necessary for demodulation of the modulation data. For example, if the OFDM modulation is conducted, demodulation processing is necessary by FFT; however, the timing of FFT is determined not to fetch unnecessary date therein. Then, if applying such a control that the turning ON/OFF of the transmitter on the panel side are completed before conducting the FFT, no influences is given on the video data. Or, it is also possible to apply such a control that the sub-frame for conducting the turning ON/OFF of the transmitter on the panel side is transmitted, at a constant distance, without transmitting the video data, so as to conduct the turning ON/OFF of the transmitter on the panel side at period of this sub-frame.

Also, though the carrier sense is applied into the up-communication operation of 5 GHz in the wireless system mentioned above, but it is also possible to apply such a structure that the transmitting operation is conducted from the panel side at a constant time-period. In this case, if applying the structure, not only executing the resending request only when the error occurs, but also returning a response of necessity of the resending at a constant time-period, then it is also possible to receive the resending data, at the constant time-period.

Also, in the wireless system mentioned above is shown the example of the structures, in which the panel side transmits the correction request; however the present invention should not be restricted to this. Thus, it is also possible not only to transmit the correction request, but also to transmit reception quality information indicative of receiving condition on the panel side. In this case, on the STA side, it is also possible to transmit the video data under the most suitable condition for the reception quality on the panel side, by changing the modulation method of the video data, upon basis of the reception quality information mentioned above. Also, other than those, it is needless to say that the information, which the panel side transmits, may be a signal for switching a video source on the STA side, etc. , including also a signal for controlling the STA side, at all times. Also, the information, which the STA side transmits, should not be limited only to the control information, the video data and the resending data; however, it is also possible to transmit the information for controlling the panel, such as, a power control, etc., on the panel side.

### <Embodiment 2>

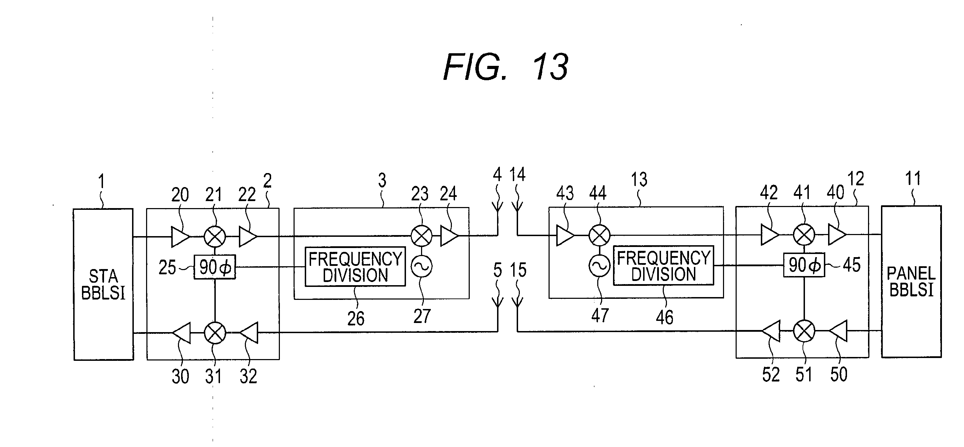

Hereinafter, explanation will be given on a second embodiment of the present invention, by referring to Figs. 13 to 15 attached.

In the present embodiment, although an outline of the structures of the short-distance wireless transmission apparatus is similar to that of the embodiment 1 mentioned above, but the 5G IF Tx/Rx portion 2 and the 5G IF Rx/Tx portion 12 are different from those in the structures thereof, and they are constructed, as will be mentioned hereinafter. Other structures thereof and also the sequences of transmission are same to those, and therefore the explanation thereof will be omitted herein.

The 5G IF Tx/Rx portion 2 is constructed with a STA transmission base-band signal processor portion 20, a STA transmission orthogonal mixer 21, a STA transmission IF amplifier 22, a STA transmission 90-degree phase shifter 25, a STA reception base-band signal processor portion 30, a STA reception orthogonal mixer 31 and a STA reception LNA 32.

Comparing to Fig. 2, there is provided no such the STA reception VCO 28, nor the STA reception 90-degree phase shifter 29. When being in the transmitting operation, an input of the transmission base-band signal from the STA BBLSI 1 is filtered out the unnecessary wave (s) thereof and is amplified, within the transmission base-band signal processor portion 20. Thereafter, the signal inputted into the STA transmission orthogonal mixer 21 is up-converted, from the transmission base-band up to the transmission IF signal of 5 GHz band, through mixing with the transmission IF orthogonal LO signal outputted by the STA transmission 90-degree phase shifter 25. The transmission IF orthogonal LO signal is made of two (2) signals having the same phase and the orthogonal phase thereto, and it is produced within the STA transmission 90-degree phase shifter 25, by dividing the transmission IFLO signal into 1/2 in frequency, which is outputted from the STA transmission frequency divider of the 60G Tx portion 3. The transmission IF signal is amplified by the STA transmission IF amplifier 22, and it is outputted to the 60G Tx portion 3. When being in the receiving operation, the reception RF signal inputted from the 5G antenna 5 is amplified within the STA reception LNA 32, and the reception RF signal amplified is mixed with the reception LO signal, which is outputted by the STA transmission 90-degree phase shifter 25, within the STA reception orthogonal mixer 31, and it is outputted to the STA reception base-band signal processor portion 30 as the reception base-band signal. Within the STA reception base-band signal processor portion 30, the desired wave is amplified while filtering out the obstructing wave (s) therefrom, thereby outputting it to the STA BBLSI 1. The reception orthogonal LO signal is produced, also in the similar manner to the transmission IF orthogonal LO signal.

The 5G IF Rx/Tx portion 12 is constructed with a panel reception base-band signal processor portion 40, a panel reception orthogonal mixer 41, a panel reception IFLNA 42, a panel reception 90-degree phase shifter 45, a panel reception base-band signal processor portion 50, a panel transmission orthogonal mixer 51 and a panel transmission amplifier 52.

Comparing to Fig. 2, there is provided no such panel transmission VCO 48, nor such panel transmission 90-degree phase shifter 49. When being in the transmitting operation, an input of the transmission base-band signal from the panel BBLSI 11 is filtered out the unnecessary wave (s) thereof and amplified, within the panel reception base-band signal processor portion 50. Thereafter, the signal inputted into the panel transmission orthogonal mixer 51 is up-converted from the transmission base-band up to the transmission RF signal of 5 GHz band, through mixing with the transmission orthogonal LO signal, which is outputted by the panel reception 90-degree phase shifter 45. The transmission orthogonal LO signal is made of two (2) signals having the shame phase and the phase orthogonal thereto, and it is produced by dividing the reception IFLO signal outputted from the panel reception frequency divider 46 of the 60G Rx portion 13, into 1/2 in frequency thereof, within the panel reception 90-degree phase shifter 45. The transmission RF signal is amplified by the panel transmission amplifier 52, and is outputted into the 5G antenna 15. When being in the receiving operation, the reception IF signal inputted from the 60G Rx portion 13 is amplified within the panel reception IFLNA 42, and the amplified reception IF signal is mixed with the reception IF orthogonal LO signal, which is outputted by the panel reception 90-degree phase shifter 45, and it is outputted into the panel reception base-band signal processor portion 40 as the reception base-band signal. Within the panel reception base-band signal processor portion 40, the desired wave is amplified while filtering out the obstruction wave (s) therefrom, and is outputted into the panel BBLSI 11. The reception IF orthogonal LO signal is produced in the similar manner to that of the transmission orthogonal LO signal.

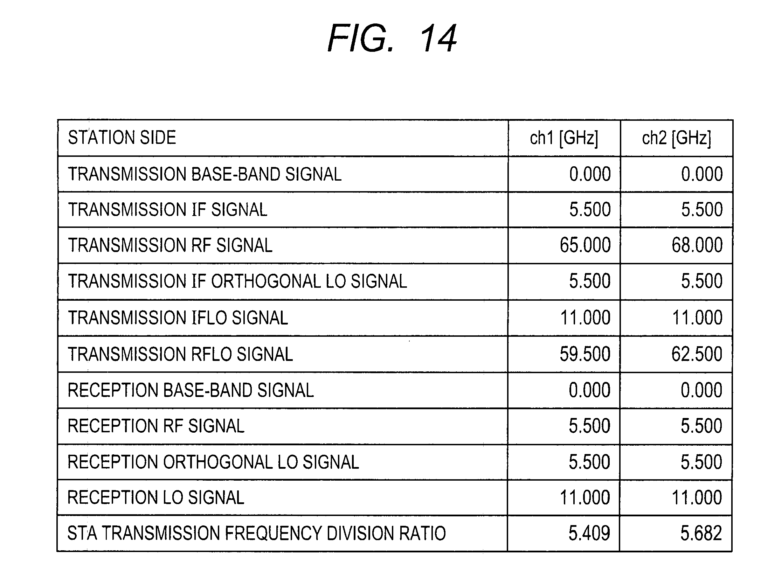

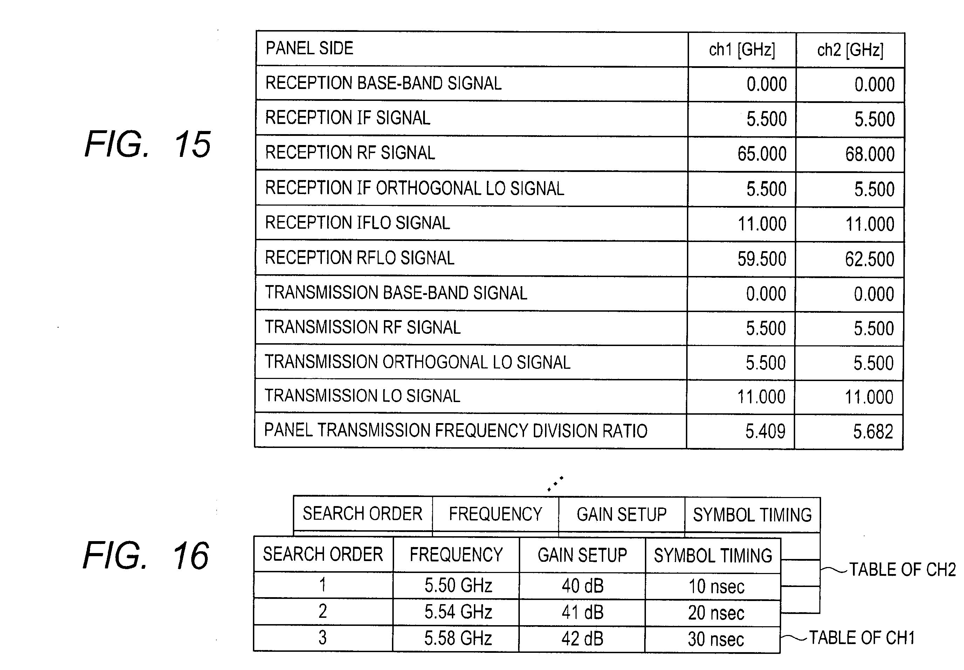

Examples of the transmission base-band signal, the transmission IF signal, the transmission RF signal, the transmission IF orthogonal LO signal, the transmission IFLO signal, the transmission RFLO signal, the reception base-band signal, the reception RF signal, the reception orthogonal LO signal, the reception LO signal, and a ratio of frequency division of the STA transmission frequency divider, on the station side of the structures mentioned above, are shown in Fig. 14. Also, examples of the reception base-band signal, the reception IF signal, the reception RF signal, the reception IF orthogonal LO signal, the reception IFLO signal, the reception RFLO signal, the transmission base-band signal, the transmission RF signal, the transmission orthogonal LO signal, the transmission LO signal, and a ratio of frequency division of the panel reception frequency divider 46, on the panel side, are shown in Fig. 15. With a frequency channel of 60 GHz, it is regulated that "ch1" is 65 GHz and "ch2" is 68 GHz, respectively, herein it is assumed that the carrier comes to 5.5 GHz, as a result of the carrier sense on the station side. As shown in Figs. 14 and 15, it is changed to 59. 5 GHz if the station side transmission RFLO signal and the panel side reception RFLO signal are "ch1", or to 62.5 GHz if they are "ch 2", and the frequency division ratio of the STA transmission frequency divider and the frequency division ratio of the panel reception frequency divider are switched to 5.409 when using the "ch1" or to 5.682 when using the "ch2". With this, it is possible to determine the up-communication frequency to be determined by the down-communication frequency and the carrier sense. In other words, by bringing the frequency division ratio of the STA transmission frequency divider to be variable, from a relationship between the up-communication frequency to be determined by the carrier sense and the down-communication frequency, it is possible to determine or set up the transmission IFLO signal and the reception LO signal on the station side to be two (2) times of the up-communication frequency by dividing the transmission RFLO signal on the station side in frequency thereof. Also, with brining the frequency division ratio of the panel reception frequency divider to be variable, it is possible to determine or set up the reception IFLO signal and the transmission LO signal on the panel side, up to two (2) times of the up-communication frequency, by dividing the reception RFLO signal in frequency thereof, in the similar manner to that on the station side. In this instance, the following relationships are satisfied:
frequency division ratio of STA transmission frequency divider = (frequency of transmission RF signal on station side ÷ frequency of transmission IF signal on station side - 1)÷ 2
frequency division ratio of panel reception frequency divider = (frequency of reception RF signal on panel side ÷ frequency of reception IF signal on panel side - 1) ÷ 2
frequency of transmission RFLO signal on station side = frequency of transmission RF signal on station side - frequency of transmission IF signal on station side = frequency of transmission IF signal on station side ÷ (2 x frequency division ratio of panel reception frequency divider)
frequency of reception RFLO signal on panel side = frequency of reception RF signal on panel side - frequency of reception IF signal on panel side = frequency of reception IF signal on panel side ÷ (2 x frequency division ratio of panel reception frequency divider)
By doing in this manner, it is possible to determine the up-communication frequency and the down-communication frequency at the desired values thereof, respectively.

Also, the frequency division ratio of (2 x STA transmission frequency divider) comes to a total frequency division ratio combining with 1/2 frequency division operation within the STA transmission 90-degree phase shifter 25. And also, the frequency division ratio of (2 x panel transmission frequency divider) comes to a total frequency division ratio combining with 1/2 frequency division operation within the panel transmission 90-degree phase shifter 45.

With such structures mentioned above, comparing to the embodiment 1, it is possible to delete the STA reception VCO 28, the STA reception 90-degree phase shifter 29, and also the panel transmission VCO 48 and the panel transmission 90-degree phase shifter 49, and thereby achieving a low cost and a low power consumption.

With the present structures, the frequency of the transmission IF signal and the reception RF signal on the station side, and also that of the reception IF signal and the transmission RF signal on the panel side are same to each other. Herein, it is assumed if a carrier of other system is detected in the frequency of the reception RF signal on the station side by the carrier sense. In this instance, since the frequency of the reception RF signal on the station side cannot be used, it is necessary to change the frequency. In case of changing the frequency during the time when receiving the video data, the video cannot be transmitted, correctly, in particular, during when changing the frequency, if the gain or the symbol timing has a frequency dependence of the IF signal, for the frequency of the IF signal to be changed. Then, the structures is so made that, the frequency change is conducted at timing of the portion of GI of the sub-frame shown in Figs. 7 to 10. Since the GI has no chance of being used as the video data, no influence is affected on the reception of the video data if that influence due to the frequency changes occurs during the GI. Other than that, no influence is affected upon reception of the video data, but not switching at the portion of GI, but if switching the frequency at a portion other than the portions, which are necessary for modulation of the modulation data. For example, if being executed with the OFDM modulation, then de-modulation process by FFT is necessary; however, the timing of FFT is so determined that no unnecessary data is taken therein. Then, if applying such a control that the frequency conversion is completed before conducting the FFT, then no influence is affected on the video data. Also, there may be applied such a control that, the frequency change is conducted at a period of the sub-frames, while transmitting the sub-frames to be executed with the frequency change, at a constant distance, but without transmitting the video data.

### <Example 3>

Hereinafter, explanation will be given on a third embodiment, by referring to Figs. 16 through 20.

The distinctive feature of the present embodiment lies in a method for determining the panel transmission frequency. The controller portion 91 on the panel side is of the structure, as is shown in Fig. 16, having a panel reception IF frequency information setup table enabling to memorize a search order for each frequency "ch" of the up-communication, a gain setup corresponding to the frequency, a symbol timing therein. The structures of transmitters on the station and the panel are same to those shown in the embodiment 1, but the transmission sequence thereof is different from that.

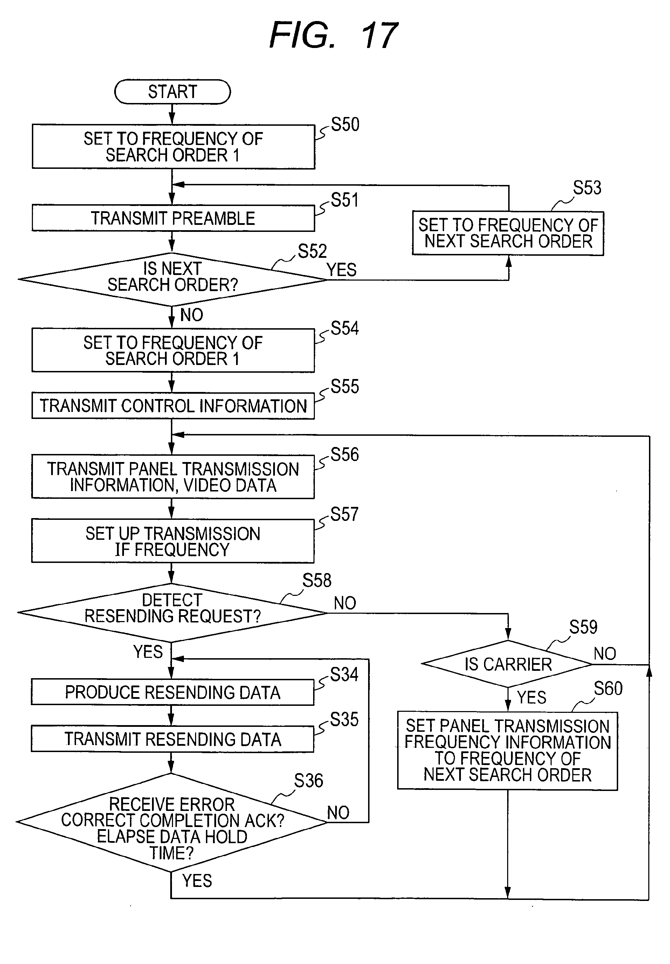

Explanation will be given on the transmitting operation on the STA side, by referring to a flowchart shown in Fig. 17. First of all, a desired transmission frequency "ch" is turned to be transmittable, and it is so set up that it can receive the frequency of "search order 1" shown in Fig. 4C (S50). Thus, within the structures of the embodiment 2, a frequency of the STA transmission RFVCO 27 and a frequency division ratio of the STA transmission frequency divider are set up or determined. After completion of setting up the frequency, a preamble is transmitted (S51). Thereafter, it is determined on presence/absence of a next search order (S52). If there is the next search order, a setup is made so as to receive the frequency indicated by the next search order (S53). If there is no search order, the panel transmission frequency information and the frequency of the transmission IF signal are set up into the frequency described in the "search order 1" (S54). Next, the control information necessary for demodulation is transmitted on the 60 GHz band (S55). Next, modulation is executed on the panel transmission frequency information and the video data, in accordance with the modulation method upon basis of the control information, to be transmitted toward to the panel side (S56). Thereafter, the frequency of the transmission IF signal is set to the same or equal frequency of the panel transmission frequency information, which is set up by the carrier sense (S57). Thus, within the structures of the embodiment 2, the frequency of the STA transmission RFVCO 27 and the frequency division ratio of the STA transmission frequency divider are determined. Also, since being so construed that the frequency of the transmission IF signal is equal to the frequency of the transmission IFLO signal and the frequency of the reception orthogonal LO signal, it is set up to be able to receive the frequency of the reception RF signal, which is equal to the frequency of the transmission IF signal. In case if receiving the carrier on the 5 GHz band, confirmation is made on presence/absence of the resending request, which is transmitted by the panel, within the reception data (S58). If there is no resending request, and it is other than the data of the panel, since it should be the transmission data from other equipment, then operation of the carrier sense is executed (S59). If it is determined there is a carrier of other system, the panel transmission frequency information is set into the frequency of the next search order (S60) . If it is determined there is no carrier, then the present panel transmission frequency information is held therein. The sequence thereafter is same to that of the embodiment 2.

If detecting the resending request, the resending data is produced (S34) upon basis of the information within the resending request, and the resending data is transmitted (S35) . Thereafter, transmission of the resending data is continued until when receiving the error correction completion ACK or when the data holding time passes away. In case when receiving the error correction completion ACK or the data holding time passes away, the transmission of the video data is continued, again (S36).

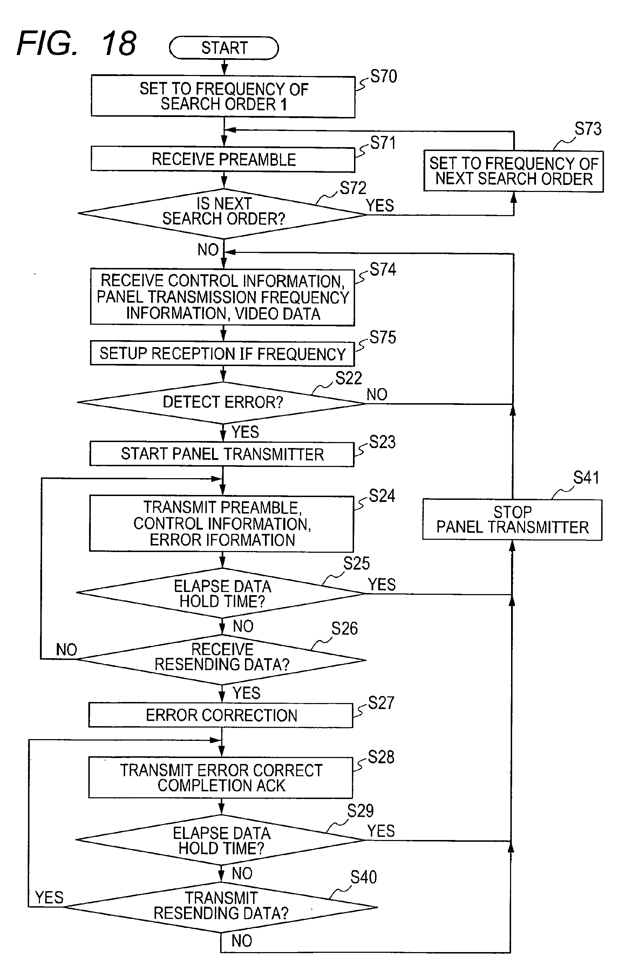

Next, explanation will be made on the transmitting operation on the panel side, by referring to a flowchart shown in Fig. 18. First of all, with bringing the frequency of "ch1", indicated on the panel reception IF frequency information setup table shown in Fig. 16, to be receivable, the frequency of the reception IF signal is set to the frequency corresponding to the "search order 1" of the table of "ch1" (S70). While receiving the preamble and executing the gain setup and the synchronization process, results of the gain setup and the synchronization process are memorized into items or columns of the gain setup and the symbol timing corresponding to the present search order within the panel reception IF frequency information setup table (S71). Next, determination is made on presence/absence of the next search order (S72). If there is the next search order, the frequency of the reception IF signal is set to the frequency corresponding to the next search order within the panel reception IF frequency information setup table (S73). If there is no next search order, at the timing of the next sub-frame, the gain setup corresponding to the "search order 1" of the panel reception IF frequency information setup table, the control information, the panel transmission frequency information and the video data, which are already memorized thereon, are received from the station side, thereby demodulating the video data (S74). At the timing of the next sub-frame, the frequency of the reception IF signal is set up upon basis of the panel transmission frequency information mentioned above, and also are used the gain setup and the symbol timing at the memorized values thereof (S75). Also, since the structures are so made that the frequency of the reception IF signal comes to be equal to the frequency of the reception IFLO signal and the frequency of the transmission orthogonal LO signal, setup is made in such that the frequency of the transmission RF signal, equal to the frequency of the reception IF signal can be transmitted therefrom. The sequence thereafter is same to that of the embodiment 2.

During the time when receiving the video data, error detection is executed on the video data (S22). If the error is detected in the video data, the panel transmitter is started. In this instance, the transmission frequency of the panel transmitter is determined upon basis of the panel transmission frequency information mentioned above (S23). When completing the startup of the panel transmitter, then the control information and the resending request are transmitted, which are necessary for demodulation of the transmission signal on the panel side (S24). Determination is made on an elapsing of the data holding time after detecting the error (S25), then the panel transmitter is stopped (S41). If determining that it is elapsed, then determination is made on presence/absence of the resending data within the data, including the video data transmitted by the STA side therein (S26), and if determining that there is no resending data therein, the resending request is transmitted, again. When receiving the resending data, correction is made on the error data upon basis of the resending data mentioned above (S27) . After completing the correction on the data mentioned above, a notice that the error correction is completed is transmitted to the STA side, as the error correction completion ACK (S28). Thereafter, determination is made on the elapsing of the data holding time (S29), and if determining it is elapsed, the panel transmitter is stopped. In case where the data holding time is not elapsed, determination is made on presence/absence of the resending data within the data, including the video data transmitted by the STA side therein (S40), and if determining that there is no resending data therein, the panel transmitter is stopped. If there is the resending data therein, since there is a possibility that the STA side could not receive the error correction completion ACK, normally, then the error correction completion ACK is transmitted, again,

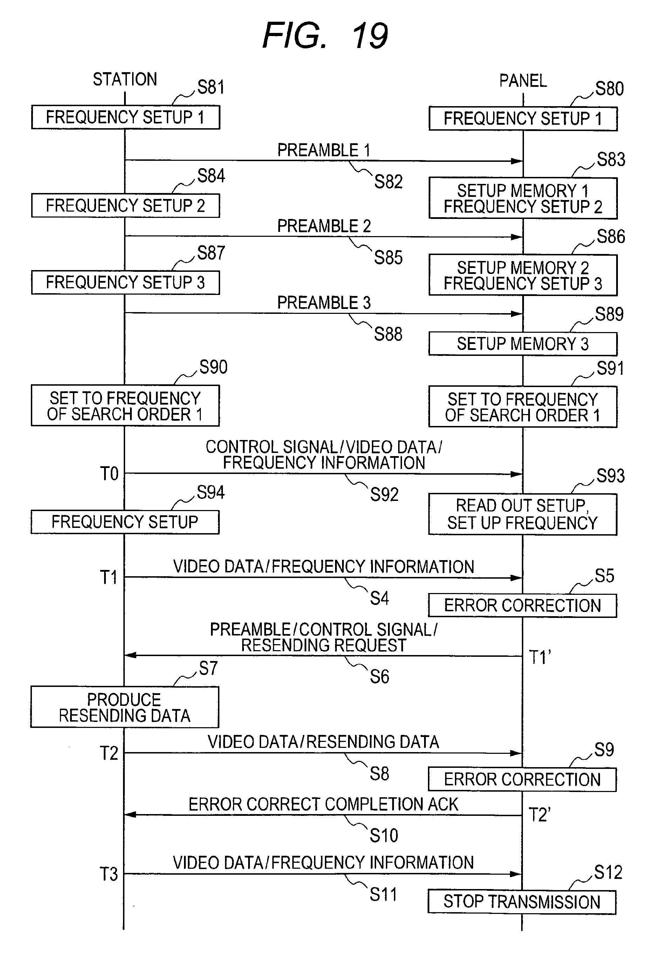

Next, explanation will be given on a flow of transmission of the video, including the resending and the correction process therein, by referring to Fig. 19.

On the panel side, upon basis of the panel reception IF frequency information setup table shown in Fig. 16, the frequency is set to that of the reception IF signal corresponding to the "search order 1" (S80). On the station side, upon basis of the panel frequency table shown in Fig. 14, the frequency is set to that of the transmission IF signal corresponding to the "search order 1" (S81), and the preamble is transmitted (S82). Next, on the panel side receiving the preamble, a result of gain setup and a result of synchronization is memorized into the items corresponding to the search order within the panel reception IF frequency information setup table, and the frequency is set to that of the reception IF signal, which is indicated by the next search order (S83). On the station side, the frequency of the transmission IF signal is set to the frequency, which is indicated by the next search order on the panel frequency table (S84), and the preamble is transmitted (S85) . Next, on the panel side receiving the preamble, the result of the gain setup result and the result of synchronization are memorized into the items corresponding to the search order within the panel reception IF frequency information setup table, and the frequency is set to that of the reception IF signal, which is indicted by the next search order (S86). On the station side, the frequency of the transmission IF signal is set to the frequency, which is indicted by the next search order on the panel frequency table (S87), and the preamble is transmitted (S88) . Next, on the panel side receiving the preamble, the gain setup result and the synchronization result are memorized into the items corresponding to the search order within the panel reception IF frequency information setup table (S89). At this timing, the frequency setup until the "search order 3" is completed, and no next search order is remained on the panel frequency table and the panel reception IF frequency information setup table shown in Figs. 14 and 16. Next, on the station side, the frequency of the transmission IF signal is set to the "search order 1". Also, since it is so structured that the frequency of the transmission IF signal is equal to the frequency of the transmission IFLO signal and the frequency of the reception orthogonal LO signal, then setup is made in such that the frequency of the reception RF signal can be received, which is equal to the frequency of the transmission IF signal (S90). On the panel side, the frequency of the reception IF signal is set into the "search order 1". Also, since it is so constructed that the frequency of the reception IF signal is equal to the frequency of the reception IFLO signal and the frequency of the transmission orthogonal LO signal, then setup is made in such that the frequency of the transmission RF signal can be received, which is equal to the frequency of the reception IF signal (S91). Thereafter, on the station side, the panel transmission frequency information and the video data are transmitted, at the timing "T0" following to the control signal (S92). On the panel side, the control signal is received at the gain setup and symbol timing, which are memorized in the "search order 1", and also the panel transmission frequency information and the video data are received, thereby to be demodulated. At the next sub-frame timing, the frequency of the reception I F signal and the gain corresponding thereto within the panel reception IF frequency information setup table and the symbol timing are set to the frequency indicated on the panel transmission frequency information demodulated (S93) . During the time when setting the frequency on the panel side, on the station side, in the similar manner to that, the frequency of the transmission IF signal is set to the frequency indicated in the panel transmission frequency information (S94). The sequence thereafter is same to that of the embodiment 2.

On the station side, at the timing "T1", information, the next video data and the panel transmission frequency information are transmitted (S4). On the panel side, when detecting loss of the sub-frame (S5), the panel side transmitter portion is stared at the timing "T1'", so as to transmit the resending request, adding error information indicating which data is lost data, following to the preamble, the GI and the control signal, as shown in Fig. 8, towards to the station side (S6) . On the station side, the OFDM signal is demodulated by the preamble and the control signal, and upon basis of the information added with the error information mentioned above, the resending data is produced (S7), and as the sub-frame shown in Fig. 9, the resending data is added to the video data, to be transmitted to the panel side (S8) . On the panel side, the video data is corrected in accordance with the resending data (S9), and if completing the error correction at timing "T2"', then the sub-frame including an error correction completion ACK, as shown in Fig. 10, is transmitted (S10). When the error correction completion ACK is received on the station side, at timing "T3", i. e. , the next frame timing, the video data and the vacant frequency information are transmitted to the panel side (S11). On the panel side, if confirming that there is no resending data or no data lost within the reception data, the transmitter on the panel side is stopped (S12).

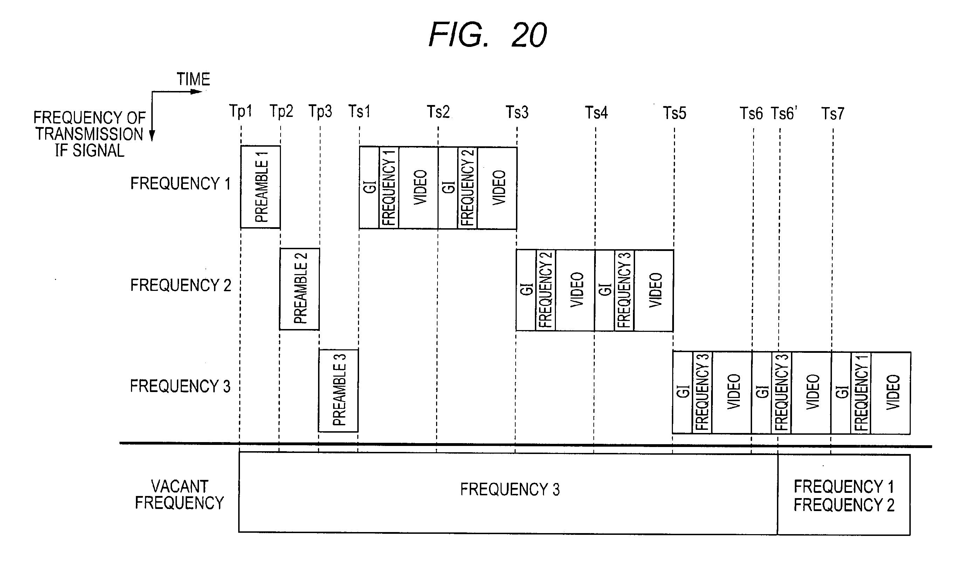

Next, by referring to Fig. 20, more detailed example of the frame structure will be shown, which is transmitted from the station side when the frequency of the transmission IF signal on the station side and the frequency of the reception IF signal on the panel side are switched, after executing the carrier sense from a start of communication. In this example, it is assumed that the frequencies of the "search order 1" and the "search order 2", which are shown in Fig. 4C, are used by other system(s), during the time-period "Ts6"' from the start of communication, and that the frequency of the "search order 3" is used by the other system(s) after "Ts6'". Also, for the purpose of simplification, with the frequencies corresponding to the search order shown in Fig. 4C, they are shown in a sequential order starting from the "search order 1"; i.e., 5.50 GHz to the "frequency 1", 5.54 GHz to the "frequency 2", and 5.58 GHz is the "frequency 3", respectively.

First of all, the frequency of the transmission IF signal is determined in the sequential order starting from the "search order 1", and the preamble is transmitted. For this reason, the frequency is set to the "frequency 1" at an initial timing "T_{P}1", and the preamble is transmitted. Next, at timing "T_{P}2", the frequency of the transmission IF signal is set to the "frequency 2", and the preamble is transmitted. In the similar manner, at timing "T_{P}3", the frequency of the transmission IF signal is set to the "frequency 3", and the preamble is transmitted. Since there is no next coming search order, at timing "Tₛ1", the frequency of the "frequency 1" is set up as the panel transmission frequency information, and the setup is made in such that the signal of the "frequency 1" can be transmitted. On the other hand, the setup is also made in such that the signal of the "frequency 1" can be received, on the station side. Also, with the carrier sense of the "frequency 1", it is started at the timing "Tₛ1" on the station side. At this timing, since the "frequency 1" is used by other system(s), the "frequency 2" of the next search order is set into the panel transmission frequency information by the carrier sense operation, at timing "Tₛ2", and the sub-frame is transmitted to the panel. Next, at timing "Tₛ3", the frequency of the transmission IF signal on station side and the frequency of the reception IF signal on the panel side are switched, thereby to transmit the sub-frame. In this instance, since the gain and the symbol timing are memorized by the preamble, which is transmitted at the timing "Tₛ2", then the sub-frame of the "frequency 2" is receivable at the gain and the symbol timing memorized. Also, with the carrier sense of the "frequency 2", it is started at the timing "Tₛ3" on the station side. However, since the "frequency 1" is also used by other system(s) at the timing "Tₛ3", then the "frequency 3" of the next search order is set into the panel transmission frequency information by the carrier sense operation, at timing "Tₛ4", and the sub-frame is transmitted to the panel. Next, at timing "Tₛ5", the frequency of the transmission IF signal on the station side and the frequency of the reception IF signal on the panel side are switched, thereby transmit the sub-frame. In this instance, since the gain and the symbol timing are memorized by the preamble, which is transmitted at the timing "Tₛ3", then the sub-frame of the "frequency 3" is receivable at the gain and the symbol timing memorized. Also, with the carrier sense of the "frequency 3", it is started at the timing "Tₛ5" on the station side. At the timing "Tₛ5", since the vacant frequency is the "frequency 3" and the transmission IF signal and the reception IF signal, which are set up at present, have also the "frequency 3", then it can be seen by the carrier sense that the vacant frequency is the "frequency 3". Accordingly, also at next coming timing "Tₛ6", the "frequency 3" is set into the panel transmission frequency information, and the sub-frame is transmitted to the panel. In this instance, since the panel transmission frequency information is not changed from the timing "Tₛ5", no switching operation is conducted from the "frequency 3". Next, it is assumed that the "frequency 3" is used by other system (s), at timing "Tₛ6'", and that the vacant frequency comes to the "frequency 1" and the "frequency 2". In this case, since no next coming search order cannot be found by the carrier sent at the timing "Tₛ6'", the "frequency 1", i.e., the first panel transmission frequency information, is set up, thereby to submit the sub-fame. Next, if conducting the operations starting from the "Tₛ6", repetitively, then it is possible to set the frequencies of the transmission IF signal and the reception IF signal to be the vacant frequency, while receiving the video data.

Within the structures of the embodiment2, the explanation was given that the influence due to the frequency change can be neglected or removed, in relation to reception of the video data, if changing the frequencies of the transmission IF signal and the reception RF signal at the portion GI and the frequencies of the reception IF signal and the transmission RF signal on the panel side. However, in case where the GI is very short, there is a possibility that the frequency change cannot be finished during the GI. In the present embodiment, the preamble is transmitted to the panel side, in advance, using the transmission IF signal and the reception IF signal, being settable, thereby memorizing the gain and the symbol timing within each setup of the frequency, in advance. With setting up the gain and the symbol timing when receiving the sub-frame, actually, it is possible to set up the gain and the symbol timing, instantaneously, even when the GI is very short, and therefore, it is possible to remove the influence due to the frequency change, in relation to reception of the video data.

In the present embodiment, the explanation was given only on the case where the frequency channel on 60 GHz band is "ch1", for the purpose of simplification of explanation. However, for other frequency channel (s), it is also possible to deal with, in the similar manner, i.e., by transmitting the preamble to the panel side, with using the settable transmission IF signal and reception IF signal, so as to memorize the gain and the symbol timing within each frequency setup, and thereby setting up the gain and the symbol timing memorized when receiving the sub-frame.

Also, within the present embodiment, there are shown the gain setup and the symbol timing, as the information to be memorized corresponding to the search order, but the present invention should not be limited to those mentioned above. Thus, it is so constructed that parameters necessary for reception are determined by the preamble, then while memorizing parameters other than gain setup and the symbol timing, so as to set up the parameters upon basis of the information when receiving the data, then it is enough to conduct the data reception.

Also, within the present embodiment, there is shown the example of only transmitting the preamble in beginning, in accordance with the sequence of the search order, but the present invention should not be limited to this. With applying the structure of transmitting the control information following the preamble, for example, and memorizing the control information in accordance with the search order in that structure, it is possible to execute the demodulation upon basis of the control information memorized when receiving the data.

Also, within the present embodiment, the explanation was given on the structure of memorizing the gain setup and the symbol timing on the panel side; however, the present invention should not be limited to this. With applying the structure of memorizing the gain setup and the symbol timing, while transmitting the preamble from the panel side, in advance, as well as, receiving the preamble on the station side, it is possible to remove the influence of the frequency in relation to the reception of the data received on the panel side, with setting up the gain setup and the symbol timing, which are memorized in advance, even if switching the frequency on the panel side.

### <Embodiment 4>

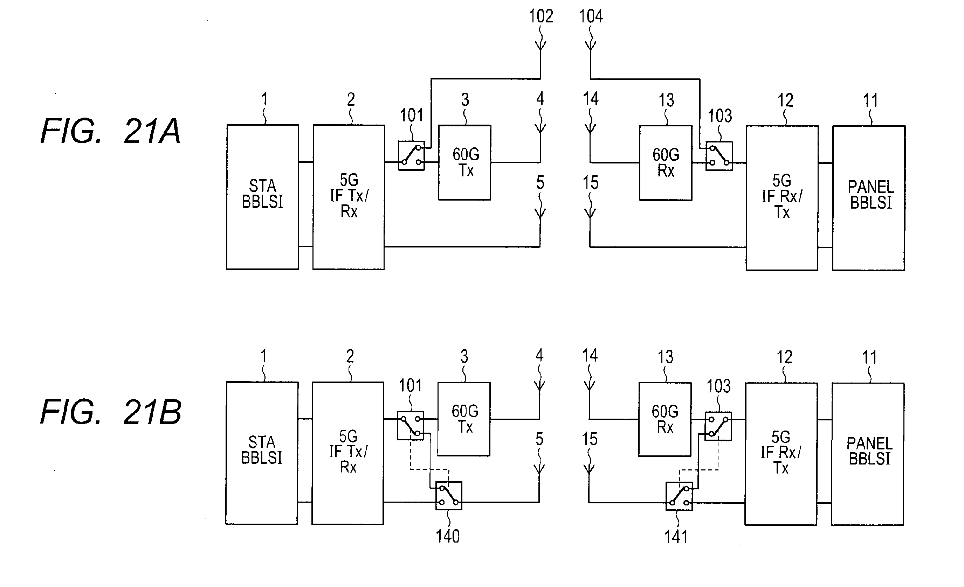

Explanation will be made on a fourth embodiment of the present invention, by referring to Figs. 21A through 23.

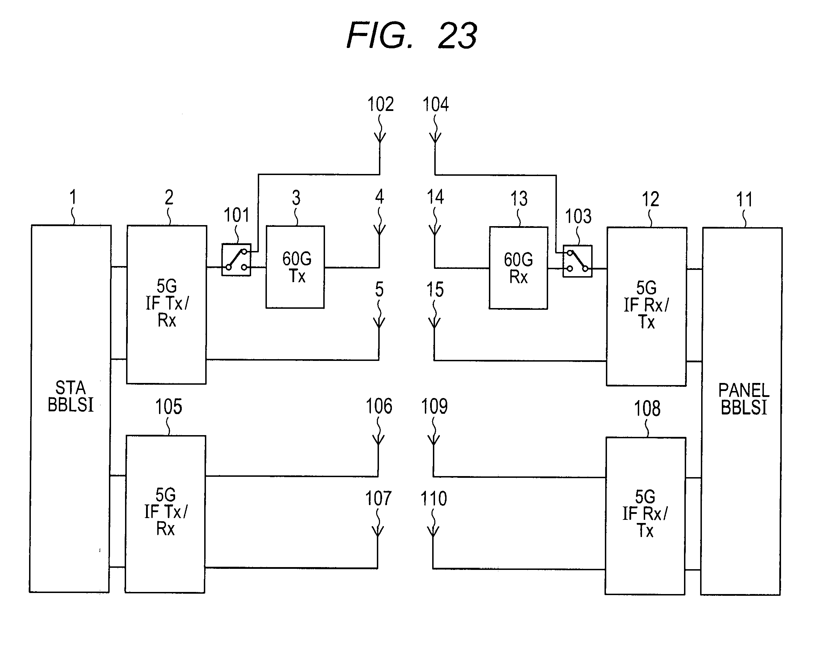

In Fig. 23A, similar to that shown in Fig. 1, the station (STA) side wireless system is constructed with the STA BBLSI 1, the 5G IF Tx/Rx portion 2, the 60G Tx portion 3, the 60G antenna 4 and the 5G antenna 5. Also, the panel side wireless system is constructed with the STA BBLSI 11, the 5G IF Rx/Tx portion 12, the 60G Tx portion 13, the 60G antenna 14 and the 5G antenna 15, wherein the STA antenna switch 101 changes the connection of the 5G IF Tx/Rx portion 2 to the 60G Tx portion 3, or to a second 5G antenna 102. The panel side wireless system is constructed with a panel antenna switch 103 and the second 5G antenna 102, wherein the panel antenna switch 103 changes the connection of the 5G IF Rx/Tx portion 12 to the 60G Tx portion 13, or a second 5G antenna 104.

Also, the 5G IF Tx/Rx portion 2 and the 5G IF Rx/Tx portion 12 are constructed to be similar to those of the embodiment 2, and therefore the frequency of the transmission IF signal and the reception RF signal on the station side is equal to that of the reception IF signal and the transmission RF signal on the panel side.

By the STA antenna switch 101, the 5G IF Tx/Rx portion 2 and the 60G Tx portion 3 are connected, and within the panel side wireless system, in case where the 5G IF Rx/Tx portion 12 and the 60G Tx portion 13 are connected by panel antenna switch 103, the sub-frame including the video and the error information, etc., is wirelessly transmitted between the station and the panel, in the similar manner to that of the embodiment 2.

In case where the STA antenna switch 101 is connected with the second 5G antenna 102, and the panel antenna switch 103 is connected with the second 5G antenna 104, since the frequency of the transmission IF signal and the reception RF signal on the station side is equal to that of the reception IF signal and the transmission RF signal on the panel side, then the up-communication frequency and the down-communication frequency is equal to each other. In this case, since transmission cannot be made on the same frequency band, then the transmission operation is executed by CSMA/CA; e. g. , transmission is made when no carrier can be found of the self system and other system through the carrier sense. Also, as the up-communication frequency and the down-communication frequency is used the same or equal frequency, which is determined in advance.

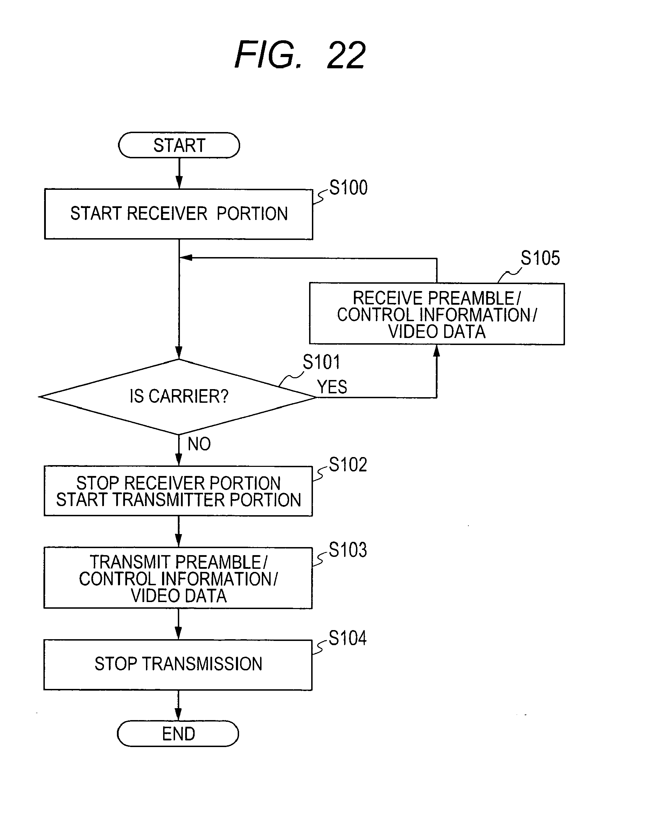

In the present embodiment, explanation will be made on the transmission operation on the station side when the STA antenna switch 101 is connected with the second 5G antenna 102, and the panel antenna switch 103 is connected with the second 5G antenna 104, by referring to a flowchart shown in Fig. 22. First of all, the receiver portion is started (S100). Next, the carrier sense is made on if no carrier can be found or not, on the frequency band, which is set up (S101). If determining that there is no carrier, the receiver portion is stopped, and the transmitter portion is started (S102). Next, the preamble, the control information and the video information are transmitted (S103). As soon as possible when finishing the transmission of the video data, the transmitter portion is stopped (S104). If determining there is the carrier when executing the carrier sense, reception is made on the preamble, the control information and the video information (S105). On the panel side, the transmission operation can be made, in the similar manner. Under the present operation mode, it is possible to transmit the video data and the control information, with building up the frequency setups on the station side and the panel side to be the same setup, if not executing the transmission of the panel transmission frequency information.

As was mentioned above, according to the present embodiment, the down-communication can be made on 5 GHz band. Also, since the transmission is done after the carrier sense, then the transmission operation can be executed by the CSMA/CA, and therefore it is possible to avoid the influence, i.e., data cannot be received due to collision of the transmission carrier. This operation mode is same to the method, which is applied in the wireless LAN, etc. Accordingly, through exchanging the antenna switch, it is possible to exchange between a high-quality, high-reliable video transmission mode with using the 60 GHz band for the down-communication, and a mode equal to the wireless LAN with using the 5 GHz. Thus, only with addition of the antenna switch and the antenna and also alternation of the control method, it is possible to have the communication modes; e.g., the communication mode of using the 60 GHz and the 5 GHz band and the communication mode of using only 5 GHz. Further, between those two (2) kinds of the communication modes, it is possible to use the STA BBLSI 1 and the 5G IF Tx/Rx portion 2 on the station side wireless system, and the STA BBLSI 11 and the 5G IF Rx/Tx portion 12 on the panel side wireless system, in common, thereby enabling a low installation area and a low cost, comparing to the structure having two (2) kinds of transmitters, separately.

With the embodiment mentioned above, the explanation was given on the transmission operation by taking the CSMA/CA, i . e. , it is determined if the transmission should be made or not through the carrier sense as an example; however, the present invention should not be limited to this. Thus, within the structure of an access control by polling, e.g., controlling the transmission from the station side at constant timing, it is also possible to have the communication mode using the 60 GHz and the 5 GHz band and the communication mode of using only 5 GHz, and thereby enabling the low installation area and the low cost, comparing to the structure having two (2) kinds of transmitters, separately.

Also, in Fig. 21B, similar to Fig. 1, the station (STA) side wireless system is constructed with the STA BBLSI 1, the 5G IF Tx/Rx portion 2, the 60G Tx portion 3, the 60G antenna 4 and the 5G antenna 5. Also, the panel side wireless system is constructed with the STA BBLSI 11, the 5G IF Rx/Tx portion 12, the 60G Tx portion 13, the 60G antenna 14 and the 5G antenna 15. In addition thereto, the station (STA) side wireless system is conducted with the STA antenna switch 101 and a second STA antenna switch 140. The STA antenna switch 101 changes the connection of the 5G IF Tx/Rx portion 2 to the 60G Tx portion 3, or to second STA antenna switch 140. The second STA antenna switch 140 connects the 5G IF Tx/Rx portion 2 or the STA antenna switch 101 with the 5G antenna 15.

In addition thereto, the panel side wireless system is constructed with the panel antenna switch 103 and a second panel antenna switch 141. The panel antenna switch 103 exchanges the connection of the 5G IF Rx/Tx portion 12 to the 60G Tx portion 13 or to the second panel antenna switch 141. The second panel antenna switch 141 connects the 5G IF Rx/Tx portion 12 or the panel antenna switch 103 with the 5G antenna 15.

Also, the 5G IF Tx/Rx portion 2 and the 5G IF Rx/Tx portion 12 are built up into the structure same to that of the embodiment 2, therefore the frequency of the transmission IF signal and the reception RF signal on the station side is equal to that of the reception IF signal and the transmission RF signal on the panel side.

In the station side wireless system, the 5G IF Tx/Rx portion 2 and the 60G Tx portion 3 are connected by the STA antenna switch 101, and the 5G IF Tx/Rx portion 2 and the 5G antenna 5 are connected by second STA antenna switch 140, while in the panel side wireless system, the 5G IF Rx/Tx portion 12 and the 60G Tx portion 13 are connected by the panel antenna switch 103, and when the 5G IF Rx/Tx portion 12 is connected with the 5G antenna 15 by the second STA antenna switch 140, with the similar operation to that of the embodiment 1, the sub-frame including the video and the error information, etc., is wirelessly transmitted between the station and the panel.

An output of the 5G IF Tx/Rx portion 2 can be transmitted from the 5G antenna 5, through the STA antenna switch 101 and the second STA antenna switch 140, and in case where an input of the 5G IF Rx/Tx portion 12 is so connected that it can be received from the 5G antenna 15, though the panel antenna switch 103 and the second panel antenna switch 141, since the frequency of the transmission IF signal and the reception RF signal on the station side is equal to that of the reception IF signal and the transmission RF signal on the panel side, then the up-communication frequency and the down-communication frequency are equal to each other. In this case, since the transmission cannot be made on the same frequency band, then the transmission operation is executed by CSMA/CA; e.g., transmission is made when no carrier can be found of the self system and other system through the carrier sense. Also, as the up-communication frequency and the down-communication frequency is used the same or equal frequency, which is determined in advance.

With the structure shown in Fig. 21B, only with addition of four (4) pieces of the antenna switches and alternation of the control method, comparing to the structures of the embodiments 1 to 3, it is possible to have the communication modes; e.g., the communication mode of using the 60 GHz and the 5 GHz band and the communication mode of using only 5 GHz. Further, between those two (2) kinds of the communication modes, it is possible to use the STA BBLSI 1 and the 5G IF Tx/Rx portion 2 on the station side wireless system, and the STA BBLSI 1, the 5G IF Rx/Tx portion 12, the 5G antenna 5 and the 5G antenna 15 on the panel side wireless system, in common, thereby enabling a low installation area and a low cost, comparing to the structure having two (2) kinds of transmitters, separately.

Also, in case when using MIMO (Multi Input Multi Output) communication, it is enough to add antennas to be connected to the 5G IF Tx/Rx portion 2 and the 5G IF Rx/Tx portion 12 and IF/RF input/output portions of those. Detailed example of the MIMO structure is shown in Fig. 23. In addition to the structure same to that shown in Fig. 21, the station side wireless system is constructed with a second 5G IF Tx/Rx portion 105, a third 5G antenna 106 and a fourth 5G antenna 107, while the panel side wireless system is constructed with a second 5G IF Rx/Tx portion 108, a third 5G antenna 109 and a fourth 5G antenna 110; thereby, enabling to input/output a plural number of signals.

In this case, it is possible to have the communication mode of using the 60 GHz and 5 GHz and the MIMO communication mode of using only the 5 GHz. Between those two (2) kinds of the communication modes, it is possible to use one (1) system, within the STA BBLSI 1 and the 5G IF Tx/Rx portion 2 of the station side wireless system, and one (1) system, within the STA BBLSI 11 and the 5G IF Rx/Tx portion 12 of the panel side wireless system, in common, thereby enabling a low installation area and a low cost, comparing to the structure having two (2) kinds of transmitters, separately.

### <Embodiment 5>

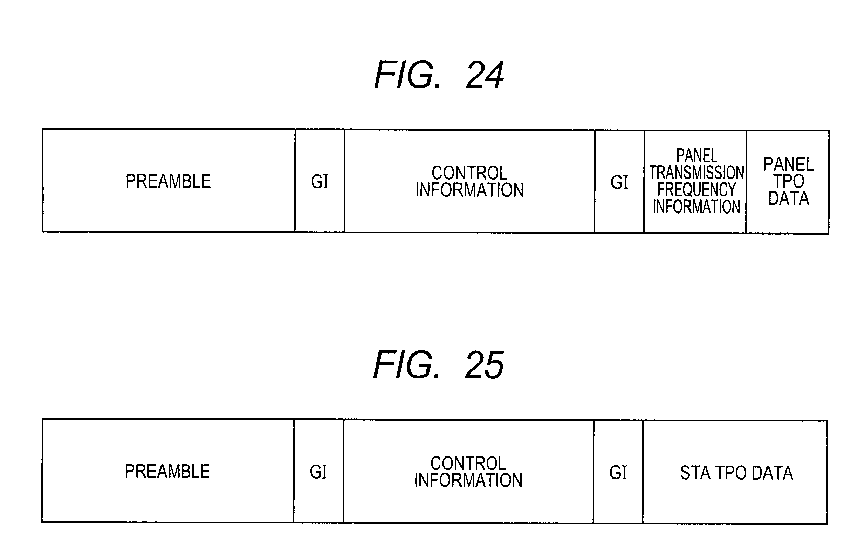

Explanation will be given on a fifth embodiment of the present invention, by referring to Figs. 24 through 28.

The structure of the present embodiment may be any one of the embodiments 1, 2 and 4. The present embodiment relates to a transmission power control (TPC) on the station side and on the panel side, and this is executed before transmitting the video data and the resending request between the station side and the panel side. Thus, this relates to a sequence of transmitting the preamble and the control information, and differs from in the transmitting operation.In more details,thestationsidetransmits the frame shown in Fig. 24 when transmitting. With this frame structure is added panel TPC information for controlling the transmission power to the frame shown in Fig. 7, and the video data is transmitted, soon when the transmission power control is finished, in the structure. On the other hand, also the panel side transmits the frame shown in Fig. 25, soon when receiving the TPC information. With this frame structure, STA TPC information for controlling the transmission power on the station side is added to the frame shown in Fig. 8. And, when the resending is necessary, in order to manage it without necessity of re-execution of optimization of the transmission power control and the receiving gain control, a station side transmission power control is executed, and a result of this is reserved; the, when resending, a panel side transmission power value and a station side gain setup value are read out. Also, within the STA TPC information and the panel TPC information stored a value indicating an increase/decrease of transmission power, or information indicating if the transmission power enters within a predetermined threshold value or not (hereinafter, "information of being within TPC threshold value"), respectively, in the structures thereof.

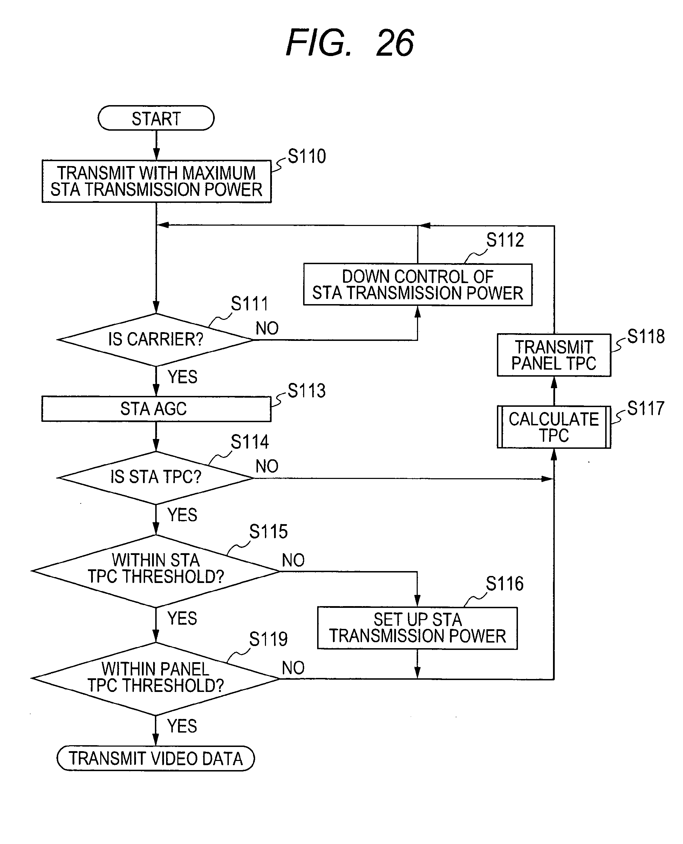

Explanation will be made about the transmission power control on the station side, by referring to a flowchart shown in Fig. 26. First of all, the transmission power on the station side is set to the maximum power, and the preamble/control information are transmitted (S110). Thereafter, the carrier sense is executed (S111); then, the transmission power is decreased by a predetermined constant value if there is no carrier (S112). For example, this may be a setup of decreasing by 2 dB in case where a transmission power control step is 2 dB. If determining that there is a carrier, then the AGC (Automatic Gain Control) is executed, thereby to set up the gain (S113). Next, it is determined on presence/absence of the STA TPC information indicating the information of transmission power control on the station side within the sub-frame received (S114). In case where there is the STA TPC information and it can be received, then determination is made on presence/absence of the information of being within TPC threshold value within the received STAT PC information (S115). If there is no information of being within TPC threshold value, upon basis of the STAT PC information received, the transmission power on the station side is controlled (S116). Thereafter, calculation is made on howmuch degree the transmission power should be increased or decreased, and the panel TPC information is set up (S117). Next, the setup panel TPC information is transmitted to the panel (S118).

On the other hand, in case where there is no STATPC information or the STA TPC information cannot be demodulated, the process advances to a flow of S117, wherein setting up and transmission is conducted on the panel TPC information.

In a flow of S115, if the information of being within TPC threshold value is within the STA TPC information received, then determination is made on presence/absence of the information of being within TPC threshold value within the panel TPC information, which is transmitted to the panel at present (S119). When the information of being within TPC threshold value is within the panel TPC information, since it can be determined that both the station and the panel come to be optimal of the transmission powers thereof, then the step shifts into a sequence of transmission of the video data and reception of the resending data. Thus, in the embodiments 1 and 2, the process shifts into the sequence of S31, and in the embodiment 4, it shifts into the sequence of S52 shown in Fig. 17.

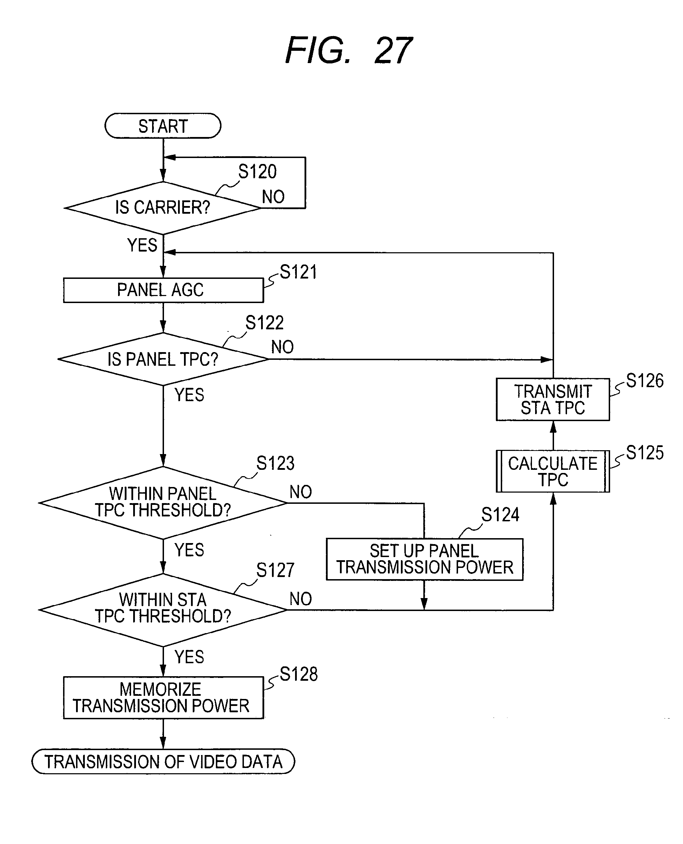

Next, explanation will be given on the transmission power control on the panel side, by referring to a flowchart shown in Fig. 27. First of all, while setting the transmission power to the minimum, the transmitter is started, to execute the carrier sense (S120). If there is no carrier, the carrier sense is continued until when the carrier is received. When it is determined that there is a carrier, then the AGC (Automatic Gain Control) is executed, thereby to set up the gain (S121). Next, determination is made on presence/absence of the panel TPC information indicating the information of transmission power control on the panel side within the sub-frame received (S122). If there is the panel TPC information and it can be received, then determination is made on presence/absence of the information of being within TPC threshold value within the panel TPC information received (S123). If there is no information of being within TPC threshold value, then upon basis of the panel TPC information received, the power transmission on the panel side is controlled (S124). Thereafter, calculation is made on howmuch degree the transmission power should be increased or decreased, and the STA TPC information is set up (S125). Next, the setup STA TPC information is transmitted to the station (S126).

On the other hand, in case where there is no panel TPC information or the panel TPC information cannot be demodulated, then the reception is repeated until when the panel TPC information can be demodulate.

In a flow of S123, if the information of being within TPC threshold value is within the STA TPC information received, then determination is made on presence/absence of the information of being within TPC threshold value within the STA TPC information, which is transmitted to the station at present (S127). When the information of being within TPC threshold value is within the STA TPC information, the present transmission power value is memorized (S128). The transmission power value memorized is set up, as the optimal transmission power, when the resending request is necessary. Thereafter, since it can be determined that both the station and the panel come to be optimal of the transmission powers thereof, then the step shifts into a sequence of transmission of the video data and reception of the resending data. Thus, in the embodiments 1 and 2, the process shifts into the sequence of S21, and in the embodiment 4, it shifts into the sequence of S52 shown in Fig. 18.

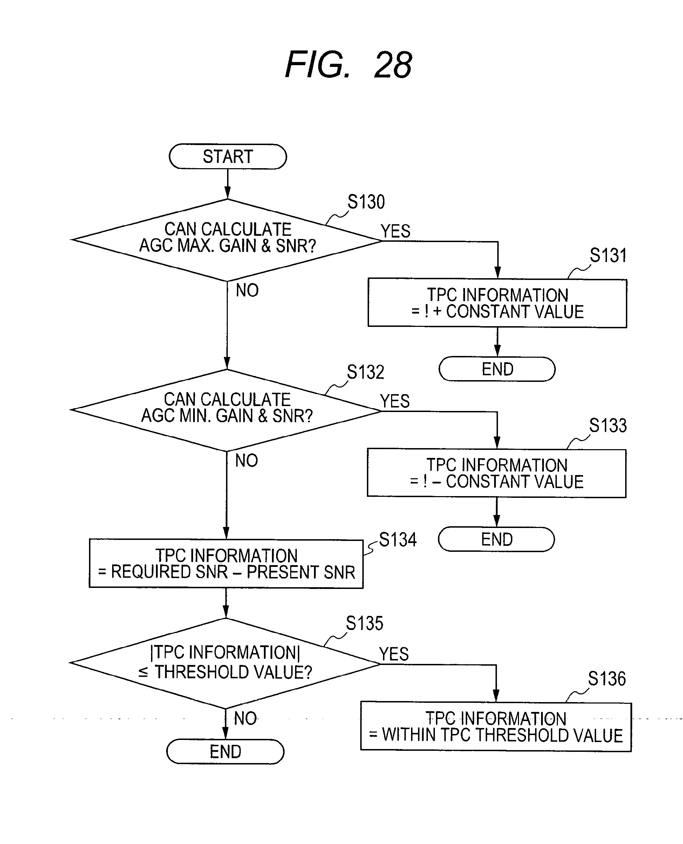

Next, explanation will be given on a setting up operation of the TPC information, by referring to a flowchart shown in Fig. 28. First of all, determination is made on whether the gain setup obtained through AGC is at the maximum gain and further SNR cannot be calculated (S130). In case where the gain setup obtained through AGC is at the maximum gain and further SNR cannot be calculated, since there is a possibility that the transmission power is too low, then information of a plus (+) constant value is set up as the TPC information. When receiving this TPC information, the transmission power is controlled so as to increase up by a constant value thereof (S131) . On the other hand, when it is not determined that the gain setup obtained through AGC is at the maximum gain and further SNR cannot be calculated, then determination is made on whether the gain setup obtained through AGC is at the minimum gain and further SNR cannot be calculated (S132). When the gain setup obtained through AGC is at the minimum gain and further SNR cannot be calculated, since there is a possibility that the transmission power is too high, then information of a minus (-) constant value is set up as the TPC information. When receiving this TPC information, the transmission power is controlled so as to decrease down by a constant value thereof (S133). On the other hand, when it is not determined that the gain setup obtained through AGC is at the minimum gain and further SNR cannot be calculated, since the SNR can be calculated, then the TPC information is set up, "required SNR" - "present SNR". The "required SNR" is determined at a value of SNR, enabling demodulation with respect to a transmission speed to be received, having a margin (S134). Thereafter, it is determined on whether an absolute value is within the predetermined threshold value, or not (S135) . When determining that it is within the threshold value, the information of being within TPC threshold value is stored within the TPC information.

With such structure as was mentioned above, it is possible to adjust the transmission power on the station side and the transmission power on the panel side to be optimal. In general, the higher the transmission power, the higher the consumption of electric power; and, since a distortion characteristic thereof also is deteriorated, an unnecessary radiation becomes large, and therefore it gives influences on data reception in both the system itself and/or other system(s). Also, on the reception side, since there is a possibility of saturation if the transmission side it too near, then it is necessary to apply a special structure of the circuit not to generate the saturation, or to construct in such that the AGC can be made upon a very strong input signal. Within the present embodiment, since the transmission powers on both the station side and the panel side can be set at the minimum satisfying the necessary SNR, therefore it is possible to suppress the power consumption. Also, since it can be used within a region where the distortion characteristic is not deteriorated, the unnecessary radiation becomes less, and both the system itself and/or other system(s) can achieve favorable transmission. In addition thereto, if the transmitter apparatuses of the station and the panel are disposed near, since the transmission power is lowered down, there is no necessity of applying the special structure of circuit for protecting from the saturation, and such very strong input signal enters therein, therefore it is also possible to reduce a range, where the gain can be set up by AGC, small.

Within the structure mentioned above, in case where the required SNR is different from for each modulation method while applying an adaption modulation method therein, it is possible to determine the optimal transmission power for the each modulation method, with applying the structure of setting up the required SNR fitting to the modulation method. Also, with applying the structure of also changing the threshold value for the each modulation method, it is also possible to bring an accuracy of setup of the transmission power to be variable.

### <Embodiment 6>

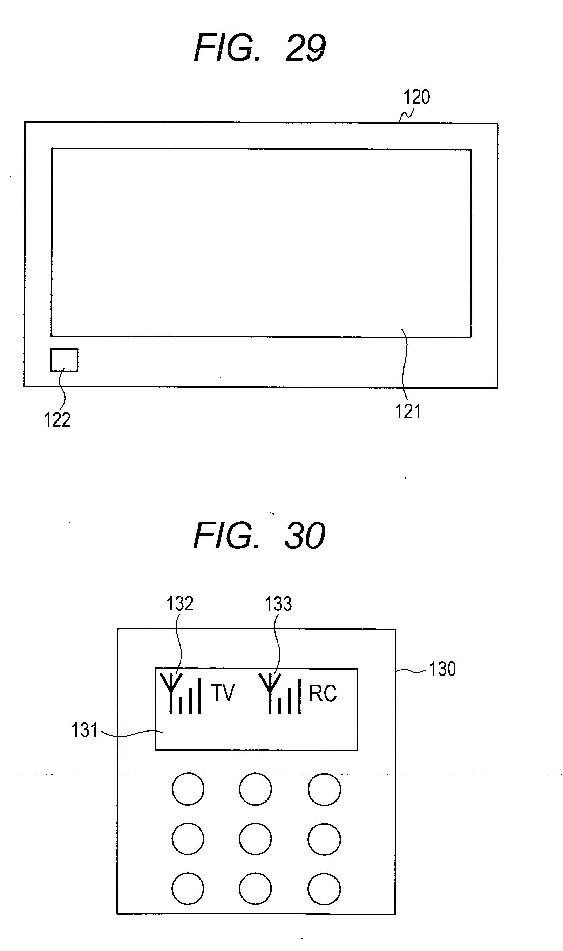

Hereinafter, explanation will be given on a sixth embodiment of the present invention, by referring to Fig. 29 attached.

The structure and the transmitting operations of the present embodiment may be any one of those of the embodiments 1, 2, 3, 4 and 5. In Fig. 29, a display system for displaying the video data received through the panel side wireless system is constructed with a display panel housing 120, a display portion 121 and a communication condition display portion 122. The communication condition display portion 122 is mounted on the surface of the displaypanel housing 120, same to that, on which the display portion 121 is mounted. The video data is transmitted from the station side, and that data is received by the panel side wireless system, and after being demodulated, it is displayed on the display portion 121. In this instance, upon basis of the reception power when receiving, the display of the communication condition display portion 122 is changed. For example, a green color is displayed when the reception power is high, while a red color is displayed when the reception power is low. With such structure mentioned above, it is possible for a user or viewer to decide the communication conditions on both the station side and the panel side, at a glance, not covering on the picture on the display portion 121. For example, when a picture disappears, suddenly, on a TV, while transmitting a television broadcast wirelessly from the station side to the panel side, it is difficult to decide whether the receiving condition of the television broadcast comes to be bad, or the wireless transmission between the station and the panel comes to be bad, or a trouble occurs in the apparatus. However, with the structure mentioned above, it is possible to determine the reception condition between the station and the panel, and in case where the receiving condition of the television broadcast is bad, a notice of that can be alerted to the user. Also, it is assumed that the communication condition is good between the station and the panel and that the communication condition display portion 122 displays the green color. In this case, if nothing is displayed on the display portion 121, it is possible to determine that there is a possibility a trouble occurs in the apparatus.

Within the structure as mentioned above, the communication condition display portion 122 indicates the communication condition with an illumination; however, the present invention should not be limited to this. For example, it may be constructed with a small-size display, so as to present radio strength by a numeral or a mark. Thus, the communication condition display portion 122 may be also so constructed to be mounted on the surface of the display panel housing 120, same to that, on which the display portion 120 is mounted, so that the communication condition can be seen for the user.

Also, in Fig. 29, although the panel side wireless system is not described, but it is assumed that it is built in the display panel housing 120.

Also, in the embodiment mentioned above, though the communication condition is changed depending on the strength of reception power; however, the present invention should not be limited to this. For example, it is also possible to change the display on the communication condition display portion 122, upon basis of SNR calculated, while calculating that SNR.

### <Embodiment 7>

Explanation will be made on a detailed example of the structure for displaying the communication condition on a remote controller, but without mounting the communication condition display portion 122 on the display panel housing 120, within the structure of the embodiment 6, by referring to Fig. 30 attached.

A RF remote controller, enabling operations of the station and the panel, as well as, wireless transmission of a control command, is constructed with a RF remote controller housing 130, a remote controller display portion 131, a panel communication condition displayportion132 and a remote controller communication condition display portion 133, wherein the panel communication condition display portion 132 displays the communication condition between the station and the panel, the remote controller communication condition display portion 133 displays the communication condition between the panel and the remote controller and the communication condition between the station and the remote controller in the structures thereof. The communication condition between the panel and the remote controller and the communication condition between the station and the remote controller are displayed on the remote controller communication condition displayportion 133, upon basis of the radio strength, which is calculated by the wireless transmission system built in the RF remote controller housing 130, in the structures thereof. The communication condition between the station and the panel is displayed on the panel communication condition display portion 132, upon basis of a reception radio strength calculated by the panel, which is received by the RF remote controller while transmitting the reception ratio strength calculated by the panel, with using the wireless reception system built in the RF remote controller housing 130. Also, as an example of display of the communication condition, an antenna mark is used, and a number of pieces of antennas is increased as the communication condition comes to be good, in the structure.

With such structure as was mentioned above, it is possible for the user to know the communication condition of the RF remote controller and the communication condition between the panel and the station, at a glance, without covering on the picture. For example, when a picture disappears, suddenly, on a TV, while transmitting a television broadcast wirelessly from the station side to the panel side, it is difficult to decide whether the receiving condition of the television broadcast comes to be bad, or the wireless transmission between the station and the panel comes to be bad, or the setup on the panel side or the station side is changed by transmitting an error control signal from the RE remote controller, or a trouble occurs in the apparatus. However, with the structure mentioned above, it is possible to determine the reception condition between the RF remote controller and the panel or the station, and also the reception condition between the station and the panel, and in case where the receiving condition of the television broadcast is bad, a notice of that can be alerted to the user. Also, it is assumed that the communication condition is good between the RF remote controller and the station or the panel, that the remote controller communication condition display portion 133 displays three (3) pieces of antennas thereon, the communication condition is good between the station and the panel, and that the remote controller communication condition display portion 133 also displays three (3) pieces of antennas thereon. In this case, if no picture is displayed, it is possible to determine that there is a possibility a trouble occurs in the apparatus.

Also, within the embodiment mentioned above, the explanation was given on the example of the RF remote controller; however, the present invention should not be limited to this. Thus, it may be in such structure that the station and the panel can be controlled other than a wire, and that communication condition can be displayed on the display portion of the remote controller, or that communication condition can be displayed on the display portion of the controller while receiving the communication condition between the station and the panel.

Also, within the embodiment mentioned above, though the communication condition is changed depending on strength of the reception power, but the present invention should not be limited to this. For example, it is also possible to calculate SNR of the reception, thereby to change display on the communication condition display portion 122 upon basis of the SNR calculated.

With the structure of the embodiment mentioned above, the panel communication condition display portion 132 and the remote controller communication condition display portion 133 display the communication conditions by the antenna marks; however the present invention should not be restricted to this. For example, it is constructed with a LED, thereby to present the radio strength are shown with an illumination thereof. Thus, it is possible to be constructed that the panel communication condition display portion 132 and the remote controller communication condition display portion 133 are mounted on the remote controller for controlling the panel side and the station side, remotely, and is displayed for the user to see it.

Also, in the embodiments 1 to 5, there is applied a heterodyne method, in which frequency is converted from the RF frequency into the IF frequency through a two (2) steps frequency conversion within the transmitter for the down-communication frequency, and thereafter it is converted into the base-band frequency; however, the heterodyne method may be applied onto the up-communication frequency. In this case, it is possible to user the 60 GHz band, being less in the interference, as the communication frequency. Also, with the down-communication frequency, there is concern s of an obstruction from other system or influences due to the interference thereof. Accordingly, with the down-communication frequency, while executing the carrier sense on the panel side, it is possible to determine the down-communication frequency at a vacant frequency, by transmitting the vacant frequency detected by the carrier sense to the station side. Also, while lowering the IF frequency very low, an interface is made with the BBLSI in a rear stage by the LOW IF frequency, in the structure thereof. In this case, the LOW IF frequency may be converted into the base band frequency within the BBLSI in the rear stage.

### <Industrial Utility of the Invention>

In the present invention, the explanation was given on the example of the video transmission between the station and the panel; however it should not be restricted to this. Thus, it is also applicable onto a wireless communication, such as, a normal data communication and/or an audio communication, etc.

When applying the embodiment 1, it is enough to determine the frequency used for the up-communication on the station side, thereby to notice, in the structure thereof.

When applying the embodiment 2, within the structure of the embodiment 1, it is enough to determine the transmission IF signal and the reception IF signal equal in the frequency thereof, and to use the VCO, which are provided separately for transmission and reception, in common, in the structure thereof.

When applying the embodiment 3, within the structure of the embodiment 2, for the purpose of executing the switching between the transmission IF signal and the reception IF signal, the gain setup, the symbol timing, which are necessary after switching, and others, such as, the parameters necessary for demodulation, etc. , may be memorized in advance, and may be reset when switching, in the structure thereof.

When applying the embodiment 4, within the structure of the embodiment 2, the antenna and the antenna switch may be added to make switching in the structure thereof, in such that the transmission can be made from an IF signal stage or the reception can be made from an IF signal stage.

When applying the embodiment 5, within the structure of the embodiments 1, 2 and 4, firstly a node "A" having an information source makes the transmission with the maximum power, and after a node "B" receiving the information source completes reception and demodulation of the transmission of the node "A", then the transmission power control is transmitted. At the node "A", the transmission power is lowered down, gradually, until when detecting that the transmission is made from the node "B", and when detecting that the transmission is made from the node "B", depending on the reception condition, the transmission power control is transmitted to the node "B". At the node "B", the transmission power is controlled upon basis of the transmission power control, which is transmitted from the node "A", and it transmits the transmission power control to the node "A", again. At the node "A", the transmission power is controlled upon basis of the power control, which is transmitted from the node "B", again.

When applying the embodiment 6, in particular, when executing the wireless communication with the equipment mounting the video display portion thereon, it is enough to display the communication condition on other display portion, which is mounted on the same surface of the housing, being same to a video display portion other than the video display portion, in the structure thereof.

When applying the embodiment 7, a node "A" and a node "B" execute wireless communication, and further with a method other than a wire, the wireless communication between the node "A" and the node "B" is controlled, remotely. The communication condition between the node "A" and the node "B" is transmitted to the remote controller for conducting remote control with the method other than the wire, via the node "A" or the node "B", and the received communication condition between the node "A" and the node "B" is displayed on the remote controller. Further, with the wireless communication between the node "A" and the node "B", it is also displayed on the remote controller.

The present invention may be embodied in other specific forms without departing from the spirit or essential feature or characteristics thereof. The present embodiment(s) is/are therefore to be considered in all respects as illustrative and not restrictive, the scope of the invention being indicated by the appended claims rather than by the forgoing description and range of equivalency of the claims are therefore to be embraces therein.

## Claims

1. A transmission method in a transmission system, including:
a station side transmitting apparatus, having a transmitter portion, which is configured to transmit with a first frequency, and a receiver portion, which is configured to receive with a second frequency different from said first frequency, wherein said transmitter portion transmits video data; and
a panel side transmitting apparatus, having a transmitter portion, which is configured to transmit with said second frequency, and a receiver portion, which is configured to receive said first frequency, wherein said transmitter portion makes a resending request for resending data for correcting an error of the video data on said transmitter portion, comprising the following steps of:
detecting on whether to receive a signal from other system or not, for each of plural numbers of reception frequencies, which are determined in advance, within the receiver portion of said station side transmitting apparatus;
noticing a reception frequency when not receiving the signal from said other system, as the second frequency, from the transmitter portion of said station side transmitting apparatus to the receiver portion of said panel side transmitting apparatus; and
executing said resending request, with the second frequency noticed, within the transmitter portion of said panel side transmitting apparatus.

2. The transmission method in a transmission system, described in the claim 1, further comprising the following steps of:
detecting on whether to detect the signal from the other system, with other frequency of the plural numbers of frequencies, which are determined in advance, when receiving the signal from said other system; and
switching to other frequency, as the second frequency, when not receiving the signal from said other system.

3. The transmission method in a transmission system, described in the claim 2, further comprising the following steps of:
executing modulation/demodulation of an OFDM method including a guard interval, upon the data to be transmitted, within said station side transmitting apparatus and said panel side transmitting apparatus; and
executing the switching to said other frequency at timing of said guard interval.

4. The transmission method in a transmission system, described in the claim 2, further comprising the following steps of:
providing an interval on a frame structure of data to be transmitted within said station side transmitting apparatus and said panel side transmitting apparatus; and
executing the switching to said other frequency at timing of said interval.

5. The transmission method in a transmission system, described in the claim 1, further comprising the following steps of:
detecting an error of said video data received in the receiver portion, within said panel side transmitting apparatus;
starting the transmitter portion of said panel side transmitting apparatus, when detecting the error of said vide data; and
executing said resending request with a receiving frequency, which is noticed, within said transmitter portion started.

6. The transmission method in a transmission system, described in the claim 5, further comprising the following steps of:
receiving the resending request within the receiver portion of said station side transmitting apparatus;
producing resending data for correcting the error of the video data, upon basis of said resending data, within said station side transmitting apparatus;
transmitting the resending data produced, by the transmitter portion of said station side transmitting apparatus;
receiving the resending data transmitted, by a receiver portion of said panel side transmitting apparatus;
executing an error correction upon basis of the resending data received, within said panel side transmitting apparatus;
noticing a completion of the error correction from the transmitter portion of said panel side transmitting apparatus to the receiver portion of said station side transmitting apparatus, when said error correction is completed;
stopping transmission of the resending data, within the transmitter portion of said station side transmitting apparatus, when the completion of the error correction is noticed; and
starting of the transmitter portion of said panel side transmitting apparatus is stopped, when no resending data is received by the receiver portion of said panel side transmitting apparatus.

7. The transmission method in a transmission system, described in the claim 6, wherein the transmission of the resending data by the transmitter portion of said station side transmitting apparatus is stopped after elapsing a constant time-period, irrespective of the notice of completion of the error correction.

8. The transmission method in a transmission system, described in the claim 6, wherein the notice of completion of the error correction from the transmitter portion of said panel side transmitting apparatus is stopped after elapsing a constant time-period, and starting of the transmitter portion of said panel side transmitting apparatus is stopped.

9. The transmission method in a transmission system, described in the claim 5, wherein control information for controlling an electric power for transmission, before transmitting the video data and the resending data, between said station side transmitting apparatus and said panel side transmitting apparatus.

10. The transmission method in a transmission system, described in the claim 1, wherein said first frequency is equal to or grater than said second frequency.

11. The transmission method in a transmission system, described in the claim 1, wherein
transmission is made with said first frequency, which is converted from said second frequency in frequency thereof, within the transmitter portion of said station side transmitting apparatus, and
reception is made with said first frequency, whereby making frequency conversion from said first frequency into said second frequency, within the receiver potion of said panel side transmitting apparatus.
